(19) Europäisches Patentamt
European Patent Office
Office européen des brevets

(11) EP 4 755 986 A1

(12) EUROPEAN PATENT APPLICATION
published in accordance with Art. 153(4) EPC

(43) Date of publication:
**10.06.2026 Bulletin 2026/24**

(21) Application number: **24849295.1**

(22) Date of filing: **02.08.2024**

(51) International Patent Classification (IPC):
***C09J 151/00*** *(2006.01)* ***B32B 27/00*** *(2006.01)*
***B32B 27/30*** *(2006.01)* ***C08F 220/00*** *(2006.01)*
***C09J 7/22*** *(2018.01)* ***C09J 7/24*** *(2018.01)*
***C09J 7/38*** *(2018.01)* ***C09J 11/08*** *(2006.01)*
***C09J 123/00*** *(2006.01)* ***C09J 133/00*** *(2006.01)*
***C09J 133/02*** *(2006.01)* ***C09J 133/04*** *(2006.01)*
***C09J 133/06*** *(2006.01)* ***C09J 133/14*** *(2006.01)*

(52) Cooperative Patent Classification (CPC):
**B32B 27/00; B32B 27/30; B32B 27/32; C08F 220/00; C09J 7/22; C09J 7/24; C09J 7/38; C09J 11/08; C09J 123/00; C09J 133/00; C09J 133/02; C09J 133/04; C09J 133/06; C09J 133/14; C09J 151/00**

(86) International application number:
**PCT/JP2024/027694**

(87) International publication number:
**WO 2025/028650 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.08.2023 JP 2023126510**
**26.04.2024 JP 2024073064**

(71) Applicant: **Sekisui Chemical Co., Ltd.**
**Osaka-shi, Osaka 530-8565 (JP)**

(72) Inventors:
- **OGATA, Yudai**
  **Mishima-gun, Osaka 618-0021 (JP)**
- **OGATA, Nagisa**
  **Mishima-gun, Osaka 618-0021 (JP)**
- **HIDA, Tomohiro**
  **Inukami-gun, Shiga 522-0314 (JP)**
- **II, Daizo**
  **Mishima-gun, Osaka 618-0021 (JP)**
- **TODA, Tomoki**
  **Mishima-gun, Osaka 618-0021 (JP)**
- **HAMASAKI, Daisuke**
  **Tsukuba-shi, Ibaraki 300-4292 (JP)**

(74) Representative: **Cabinet Beau de Loménie**
**103, rue de Grenelle / CS 90800**
**75340 Paris Cedex 07 (FR)**

# (54) ACRYLIC ADHESIVE COMPOSITION, ADHESIVE, ADHESIVE TAPE, METHOD FOR PRODUCING ADHESIVE TAPE, AND METHOD FOR PRODUCING ACRYLIC COPOLYMER

(57) The present invention aims to provide an acrylic adhesive composition that has excellent applicability to enable application without lines or streaks and can exhibit high adhesion. The present invention also aims to provide an adhesive formed from the adhesive composition and an adhesive tape formed from the acrylic adhesive composition. The present invention aims to also provide an adhesive tape having good appearance without lines or streaks. The present invention also aims to provide a method for producing an adhesive tape formed from the acrylic adhesive composition. The present invention also aims to provide a method for producing an acrylic copolymer, the acrylic copolymer being usable in an acrylic adhesive composition that has excellent applicability to enable application without lines or streaks and that can exhibit high adhesion. Provided is an acrylic adhesive composition containing: an acrylic copolymer; and a solvent, the acrylic copolymer including a structural unit derived from an alkyl (meth)acrylate and a structural unit derived from an olefin polymer having a polymerizable unsaturated double bond at an end, the solvent including at least one solvent selected from the group consisting of a hydrocarbon solvent and a solvent having an SP value of 7.2 $(J/cm^3)^{1/2}$ or greater and 8.6 $(J/cm^3)^{1/2}$ or less, the acrylic adhesive composition having a solid content of 15% by mass or more and 50% by mass or less.

FIG.1

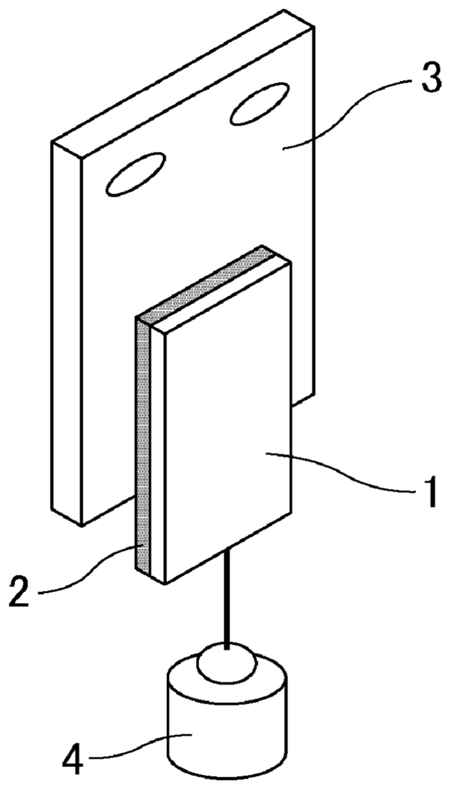

## Description

TECHNICAL FIELD

The present invention relates to an acrylic adhesive composition. The present invention also relates to an adhesive formed from the adhesive composition and an adhesive tape formed from the acrylic adhesive composition. The present invention also relates to an adhesive tape. The present invention also relates to a method for producing an adhesive tape formed from the acrylic adhesive composition. The present invention also relates to a method for producing an acrylic copolymer.

BACKGROUND ART

Adhesive tapes including an adhesive layer containing an adhesive have been widely used to fix components in electronic devices, vehicles, houses, and building materials (see Patent Literatures 1 to 3, for example). Specifically, for example, adhesive tapes are used to bond a cover panel for protecting a surface of a portable electronic device to a touch panel module or display panel module, or to bond a touch panel module to a display panel module.

CITATION LIST

- Patent Literature

Patent Literature 1: JP 2015-052050 A
Patent Literature 2: JP 2015-021067 A
Patent Literature 3: JP 2015-120876 A

SUMMARY OF INVENTION

- Technical problem

Acrylic adhesives containing acrylic copolymers have excellent adhesion and are widely used. To impart stronger adhesion to acrylic adhesives, monomers other than acrylate may be copolymerized as the constituent monomers of acrylic copolymers. However, in the case of using an acrylic adhesive containing such an acrylic copolymer containing monomers other than acrylate, the acrylic adhesive is difficult to uniformly apply, making it difficult to produce an adhesive tape including an adhesive layer or to bond adherends using the adhesive in a liquid form. Moreover, in such a case, an adhesive tape including an adhesive layer produced by applying the acrylic adhesive composition may have poor appearance with lines or streaks in the adhesive layer.

Thus, achieving an acrylic adhesive composition having excellent applicability while exhibiting high adhesion has been a challenge.

The present invention aims to provide an acrylic adhesive composition that has excellent applicability to enable application without lines or streaks and that can exhibit high adhesion. The present invention also aims to provide an adhesive formed from the adhesive composition and an adhesive tape formed from the acrylic adhesive composition. The present invention also aims to provide an adhesive tape having good appearance without lines or streaks. The present invention also aims to provide a method for producing an adhesive tape formed from the acrylic adhesive composition. The present invention also aims to provide a method for producing an acrylic copolymer, the acrylic copolymer being usable in an acrylic adhesive composition that has excellent applicability to enable application without lines or streaks and that can exhibit high adhesion.

- Solution to problem

The disclosure 1 relates to an acrylic adhesive composition containing: an acrylic copolymer; and a solvent, the acrylic copolymer including a structural unit derived from an alkyl (meth)acrylate and a structural unit derived from an olefin polymer having a polymerizable unsaturated double bond at an end, the solvent including at least one solvent selected from the group consisting of a hydrocarbon solvent and a solvent having an SP value of 7.2 $(J/cm^3)^{1/2}$ or greater and 8.6 $(J/cm^3)^{1/2}$ or less, the acrylic adhesive composition having a solid content of 15% by mass or more and 50% by mass or less.

The disclosure 2 relates to the acrylic adhesive composition according to the disclosure 1, wherein the solvent

includes a hydrocarbon solvent, and the hydrocarbon solvent includes an aliphatic hydrocarbon solvent.

The disclosure 3 relates to the acrylic adhesive composition according to the disclosure 2, wherein the aliphatic hydrocarbon solvent includes a C6-C9 aliphatic hydrocarbon compound.

The disclosure 4 relates to the acrylic adhesive composition according to the disclosure 3, wherein the C6-C9 aliphatic hydrocarbon compound includes at least one selected from the group consisting of normal hexane, cyclohexane, and methylcyclohexane.

The disclosure 5 relates to the acrylic adhesive composition according to the disclosure 1, 2, 3, or 4, wherein the solvent further includes at least one solvent selected from the group consisting of an ester solvent and a solvent having an SP value of greater than 8.6 $(J/cm^3)^{1/2}$ and 9.0 $(J/cm^3)^{1/2}$ or less.

The disclosure 6 relates to the acrylic adhesive composition according to the disclosure 5, wherein the solvent includes an ester solvent, the ester solvent includes an ester compound represented by the following formula (1), and the hydrocarbon solvent is contained in a proportion of 5.0% by mass or more and less than 100% by mass in a total amount of the hydrocarbon solvent and the ester solvent contained.

The disclosure 7 relates to the acrylic adhesive composition according to the disclosure 1, 2, 3, 4, 5, or 6, wherein the hydrocarbon solvent includes no aromatic hydrocarbon solvent, or the hydrocarbon solvent includes an aromatic hydrocarbon solvent, and the aromatic hydrocarbon solvent is present at a concentration of 1,000 ppm or less in the solvent.

The disclosure 8 relates to the acrylic adhesive composition according to the disclosure 1, 2, 3, 4, 5, 6, or 7, wherein the structural unit derived from an alkyl (meth)acrylate includes a structural unit derived from an alkyl (meth) acrylate containing an alcohol-derived C1-C4 alkyl group.

The disclosure 9 relates to the acrylic adhesive composition according to the disclosure 1, 2, 3, 4, 5, 6, 7, or 8, wherein the structural unit derived from an alkyl (meth)acrylate is contained in a proportion of 50% by mass or more and 99% by mass or less in the acrylic copolymer.

The disclosure 10 relates to the acrylic adhesive composition according to the disclosure 1, 2, 3, 4, 5, 6, 7, 8, or 9, wherein the structural unit derived from an olefin polymer having a polymerizable unsaturated double bond at an end is contained in a proportion of 5.0% by mass or more in the acrylic copolymer.

The disclosure 11 relates to the acrylic adhesive composition according to the disclosure 1, 2, 3, 4, 5, 6, 7, 8, 9, or 10, wherein the acrylic copolymer includes a structural unit derived from a monomer containing a polar functional group.

The disclosure 12 relates to the acrylic adhesive composition according to the disclosure 11, wherein the structural unit derived from a monomer containing a polar functional group includes at least one selected from the group consisting of a structural unit derived from a carboxy group-containing monomer and a structural unit derived from a hydroxy group-containing monomer.

The disclosure 13 relates to the acrylic adhesive composition according to the disclosure 11 or 12, wherein the structural unit derived from a monomer containing a polar functional group is contained in a total proportion of 0.1% by mass or more and 20% by mass or less in the acrylic copolymer.

The disclosure 14 relates to the acrylic adhesive composition according to the disclosure 1, 2, 3, 4, 5, 6, 7, 8, 9, 10, 11, 12, or 13, containing a tackifier resin.

The disclosure 15 relates to the acrylic adhesive composition according to the disclosure 14, wherein the tackifier resin includes a high-hydroxyl-value tackifier resin having a hydroxyl value of 15 mg KOH/g or greater.

The disclosure 16 relates to the acrylic adhesive composition according to the disclosure 14 or 15, wherein the tackifier resin is contained in an amount of 40 parts by mass or less relative to 100 parts by mass of the acrylic copolymer.

The disclosure 17 relates to the acrylic adhesive composition according to the disclosure 1, 2, 3, 4, 5, 6, 7, 8, 9, 10, 11, 12, 13, 14, 15, or 16, containing a crosslinking agent.

The disclosure 18 relates to an adhesive formed from the acrylic adhesive composition according to the disclosure 1, 2, 3, 4, 5, 6, 7, 8, 9, 10, 11, 12, 13, 14, 15, 16, or 17.

The disclosure 19 relates to an adhesive tape including an adhesive layer formed from the acrylic adhesive composition according to the disclosure 1, 2, 3, 4, 5, 6, 7, 8, 9, 10, 11, 12, 13, 14, 15, 16, or 17.

The disclosure 20 relates to an adhesive tape including an adhesive layer formed using an acrylic adhesive composition, the acrylic adhesive composition containing an acrylic copolymer, the acrylic copolymer including a structural unit derived from an alkyl (meth)acrylate and a structural unit derived from an olefin polymer having a polymerizable unsaturated double bond at an end, the adhesive layer containing a solvent, the solvent including an aliphatic hydrocarbon solvent.

The disclosure 21 relates to the adhesive tape according to the disclosure 20, wherein the acrylic copolymer includes a structural unit derived from a monomer containing a polar functional group.

The disclosure 22 relates to the adhesive tape according to the disclosure 19, 20, or 21, wherein the adhesive layer contains no aromatic hydrocarbon solvent, or

the adhesive layer contains an aromatic hydrocarbon solvent, and the aromatic hydrocarbon solvent is present at a concentration of 300 ppm or less in the adhesive layer.

The disclosure 23 relates to the adhesive tape according to the disclosure 19, 20, 21, or 22, wherein the adhesive layer has a gel fraction of 10% by mass or more and 70% by mass or less.

The disclosure 24 relates to the adhesive tape according to the disclosure 19, 20, 21, 22, or 23, including a substrate.

The disclosure 25 relates to the adhesive tape according to the disclosure 19, 20, 21, 22, 23, or 24, which is used for fixing an electronic device component or an in-vehicle component.

The disclosure 26 relates to a method for producing an adhesive tape, including a step of applying the acrylic adhesive composition according to the disclosure 1, 2, 3, 4, 5, 6, 7, 8, 9, 10, 11, 12, 13, 14, 15, 16, or 17.

The disclosure 27 relates to a method for producing an acrylic copolymer, including a step (i) of polymerizing a monomer mixture containing an alkyl (meth)acrylate and an olefin polymer having a polymerizable unsaturated double bond at an end in a solvent in the presence of a polymerization initiator, the solvent including a hydrocarbon solvent.

The disclosure 28 relates to the method for producing an acrylic copolymer according to the disclosure 27, wherein the hydrocarbon solvent includes an aliphatic hydrocarbon solvent.

The disclosure 29 relates to the method for producing an acrylic copolymer according to the disclosure 28, wherein the aliphatic hydrocarbon solvent includes a C6-C9 aliphatic hydrocarbon compound.

The disclosure 30 relates to the method for producing an acrylic copolymer according to the disclosure 29, wherein the C6-C9 aliphatic hydrocarbon compound includes at least one selected from the group consisting of normal hexane, cyclohexane, and methylcyclohexane.

The disclosure 31 relates to the method for producing an acrylic copolymer according to the disclosure 27, 28, 29, or 30, wherein the solvent further includes an ester solvent, the ester solvent includes an ester compound represented by the following formula (1), the hydrocarbon solvent is blended in a proportion of 5.0% by mass or more and less than 100% by mass in a total amount of the hydrocarbon solvent and the ester solvent blended.

The disclosure 32 relates to the method for producing an acrylic copolymer according to the disclosure 27, 28, 29, 30, or 31, wherein the polymerization initiator includes at least one selected from the group consisting of an organic peroxide and an azo compound.

The disclosure 33 relates to the method for producing an acrylic copolymer according to the disclosure 27, 28, 29, 30, 31, or 32, wherein the polymerization initiator is blended in an amount of 0.01 parts by mass or more and 3.0 parts by mass or less relative to 100 parts by mass of the monomer mixture.

The disclosure 34 relates to the method for producing an acrylic copolymer according to the disclosure 27, 28, 29, 30, 31, 32, or 33, wherein in the step (i), the monomer mixture is polymerized at a temperature of 50°C or higher and 100°C or lower in the solvent in the presence of the polymerization initiator.

[Chem. 1]

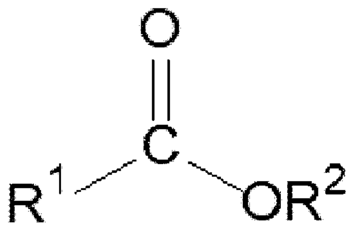

(1)

In the formula (1), $R^1$ and $R^2$ each independently represent a C1-C5 aliphatic hydrocarbon group.

The present invention is described in detail below.

The adhesive tape according to the disclosure 19 is also referred to as "the adhesive tape of a 19th embodiment of the present invention". The adhesive tape according to the disclosure 20 is also referred to as "the adhesive tape of a 20th embodiment of the present invention". Matters common to the adhesive tape of the 19th embodiment of the present invention and the adhesive tape of the 20th embodiment of the present invention are described without specifying which adhesive tape, or such matters are described as matters for "the adhesive tape of the present invention".

The present inventors studied acrylic copolymers contained in acrylic adhesive compositions. As a result, the inventors found out that an acrylic copolymer including a structural unit derived from an alkyl (meth)acrylate and a structural unit derived from an olefin polymer having a polymerizable unsaturated double bond at an end can exhibit high adhesion. The inventors also studied solvents contained in acrylic adhesive compositions. As a result, the inventors found out that an acrylic adhesive composition containing a low-polarity solvent (e.g., hydrocarbon solvent), instead of commonly used solvents such as ethyl acetate, has excellent applicability even when the acrylic copolymer contains an acrylic copolymer containing a low-polarity monomer other than acrylate. The present inventors then found out that an acrylic adhesive composition containing the acrylic copolymer capable of exhibiting high adhesion and the low-polarity solvent has excellent applicability to enable application without lines or streaks and can exhibit high adhesion. The present

invention was thus completed.

The acrylic adhesive composition of the present invention contains an acrylic copolymer.

The acrylic copolymer includes a structural unit derived from an alkyl (meth)acrylate.

The "(meth)acrylate" herein means acrylate or methacrylate.

The structural unit derived from an alkyl (meth)acrylate preferably includes a structural unit derived from an alkyl (meth)acrylate containing an alcohol-derived C1-C4 alkyl group. When the structural unit derived from an alkyl (meth) acrylate includes the structural unit derived from an alkyl (meth)acrylate containing an alcohol-derived C1-C4 alkyl group, the acrylic adhesive composition of the present invention can exhibit better holding performance at high temperature.

The "alcohol-derived alkyl group" herein refers to an alkyl group bound to an oxygen atom of an ester bond in the alkyl (meth)acrylate.

Examples of the alkyl (meth)acrylate containing an alcohol-derived C1-C4 alkyl group include alkyl (meth) acrylates obtained by dehydration-condensation of (meth)acrylic acid with an alcohol containing a linear or branched C1-C4 alkyl group. Specific examples include methyl (meth)acrylate, ethyl (meth)acrylate, n-butyl (meth)acrylate, s-butyl (meth)acrylate, t-butyl (meth)acrylate, and isobutyl (meth)acrylate. Preferred among these is n-butyl (meth)acrylate.

Each of these alkyl (meth)acrylates may be used alone, or two or more of them may be used in combination.

The lower limit of the proportion of the structural unit derived from an alkyl (meth)acrylate containing an alcohol-derived C1-C4 alkyl group in the structural unit derived from an alkyl (meth)acrylate is preferably 50% by mass. When the proportion of the structural unit derived from an alkyl (meth)acrylate containing an alcohol-derived C1-C4 alkyl group is 50% by mass or more, the acrylic adhesive composition of the present invention can exhibit higher adhesion and better holding performance. The lower limit of the proportion of the structural unit derived from an alkyl (meth)acrylate containing an alcohol-derived C1-C4 alkyl group is more preferably 60% by mass, still more preferably 70% by mass. Most preferably, the proportion of the structural unit derived from an alkyl (meth)acrylate containing an alcohol-derived C1-C4 alkyl group is 100% by mass, in other words, the structural unit derived from an alkyl (meth)acrylate consists only of the structural unit derived from an alkyl (meth)acrylate containing an alcohol-derived C1-C4 alkyl group.

The structural unit derived from an alkyl (meth)acrylate may include a structural unit derived from a different alkyl (meth)acrylate other than the structural unit derived from an alkyl (meth)acrylate containing an alcohol-derived C1-C4 alkyl group.

Specific examples of the different alkyl (meth)acrylate include n-pentyl (meth)acrylate, isopentyl (meth)acrylate, n-hexyl (meth)acrylate, isohexyl (meth)acrylate, isoheptyl (meth)acrylate, n-heptyl (meth)acrylate, 2-ethylhexyl (meth) acrylate, 1-methylheptyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, n-tetradecyl (meth)acrylate, pentadecyl (meth)acrylate, hexadecyl (meth)acrylate, heptadecyl (meth)acrylate, stearyl (meth)acrylate, and isostearyl (meth)acrylate. From the standpoint of improving the adhesion, n-hexyl (meth)acrylate, 2-ethylhexyl (meth)acrylate, n-heptyl (meth)acrylate, and 1-methylheptyl (meth)acrylate are preferred. 2-Ethylhexyl (meth)acrylate and n-heptyl (meth)acrylate are more preferred.

Each of these alkyl (meth)acrylates may be used alone, or two or more of them may be used in combination.

The lower limit of the proportion of the structural unit derived from an alkyl (meth)acrylate in the acrylic copolymer is preferably 50% by mass, and the upper limit thereof is preferably 99% by mass. When the proportion of the structural unit derived from an alkyl (meth)acrylate is 50% by mass or more, the acrylic adhesive composition can easily maintain the performance as adhesive. Moreover, the polymerization reaction in the production can proceed efficiently. When the proportion of the structural unit derived from an alkyl (meth)acrylate is 99% by mass or less, the acrylic adhesive composition of the present invention can easily maintain the performance as adhesive. The lower limit of the proportion of the structural unit derived from an alkyl (meth)acrylate is more preferably 60% by mass, and the upper limit thereof is more preferably 95% by mass. The lower limit is still more preferably 70% by mass, and the upper limit is still more preferably 90% by mass.

The acrylic copolymer includes a structural unit derived from an olefin polymer having a polymerizable unsaturated double bond at an end. When the acrylic copolymer includes a structural unit derived from an olefin polymer having a polymerizable unsaturated double bond at an end, in the adhesive or adhesive layer formed from the acrylic adhesive composition of the present invention, the structural units derived from an olefin polymer having a polymerizable unsaturated double bond at an end, which are present in side chains of the acrylic copolymer, interact with each other and thereby cohere, forming pseudo-crosslinking points between molecules. With the acrylic copolymer having such a structure, the adhesive or adhesive layer formed from the acrylic adhesive composition of the present invention can exhibit, under low strain, a hard nature like a crosslinked adhesive or adhesive layer and thus further improved holding power. In contrast, under high strain due to peel stress applied to the adhesive or adhesive layer, as the pseudo-crosslinking break and the molecules of the acrylic copolymer stretch, the adhesive or adhesive layer formed from the acrylic adhesive composition of the present invention exhibits a highly flexible nature and improved adhesion. In other words, when the acrylic copolymer includes the structural unit derived from an olefin polymer having a polymerizable unsaturated double bond at an end, the acrylic adhesive composition of the present invention can exhibit high adhesion

and higher holding performance.

The olefin polymer having a polymerizable unsaturated double bond at an end may have a polymerizable unsaturated double bond at one end or may have polymerizable unsaturated double bonds at both ends. Preferred is an olefin polymer having a polymerizable unsaturated double bond at one end because such an olefin copolymer facilitates the formation of an appropriate number of pseudo-crosslinking points.

Examples of the olefin polymer having a polymerizable unsaturated double bond at an end include ethylene-butylene copolymers, ethylene-propylene copolymers, ethylene polymers, propylene polymers, and butylene polymers that have at one or both ends a group having a polymerizable unsaturated double bond.

Each of these olefin polymers having a polymerizable unsaturated double bond at an end may be used alone, or two or more of them may be used in combination.

Examples of a group having the polymerizable unsaturated double bond include a (meth)acryloyl group, a vinyl ether group, and a styryl group. Preferred among these is a (meth)acryloyl group because it has good copolymerizability with the alkyl (meth)acrylates.

The "(meth)acryloyl" herein means acryloyl or methacryloyl.

Examples of the olefin polymer having a (meth)acryloyl group at an end include ethylene macromonomers having a (meth)acryloyl group at one end, propylene macromonomers having a (meth)acryloyl group at one end, ethylene-butylene macromonomers having a (meth)acryloyl group at one end, and ethylene-propylene macromonomers having a (meth)acryloyl group at one end. Preferred are ethylene-butylene macromonomers having a (meth)acryloyl group at one end and ethylene-propylene macromonomers having a (meth)acryloyl group at one end, because they make it easy for the later-described glass transition temperature of the acrylic copolymer to satisfy an appropriate range, and allow the acrylic adhesive composition of the present invention to exhibit better adhesion.

The "macromonomer" herein refers to a monomer having a weight average molecular weight of about 1,000 to 100,000 and having a polymerizable functional group.

The lower limit of the proportion of the structural unit derived from an olefin polymer having a polymerizable unsaturated double bond at an end in the acrylic copolymer is preferably 5.0% by mass. When the proportion of the structural unit derived from an olefin polymer having a polymerizable unsaturated double bond at an end is 5.0% by mass or more, the acrylic copolymer can form a moderate number of pseudo-crosslinking points, and the acrylic adhesive composition of the present invention can exhibit higher adhesion. The lower limit of the proportion of the structural unit derived from an olefin polymer having a polymerizable unsaturated double bond at an end is more preferably 10% by mass, still more preferably 20% by mass.

The upper limit of the proportion of the structural unit derived from an olefin polymer having a polymerizable unsaturated double bond at an end is preferably 40% by mass. When the proportion of the structural unit derived from an olefin polymer having a polymerizable unsaturated double bond at an end is 40% by mass or less, cohesive failure of the acrylic adhesive composition of the present invention can be further reduced. The upper limit of the proportion of the structural unit derived from an olefin polymer having a polymerizable unsaturated double bond at an end is preferably 35% by mass, more preferably 30% by mass.

The acrylic copolymer preferably includes a structural unit derived from a monomer containing a polar functional group. When the acrylic copolymer includes the structural unit derived from a monomer containing a polar functional group, the acrylic copolymer can have higher polarity, which increases the cohesion of the acrylic adhesive composition of the present invention, resulting in better holding performance at high temperature. Moreover, in the case that the acrylic adhesive composition of the present invention contains the later-described crosslinking agent, the acrylic copolymer forms a structure crosslinked via the crosslinking agent, allowing the acrylic adhesive composition of the present invention to exhibit better adhesion and better holding performance.

Examples of the monomer containing a polar functional group include a carboxy group-containing monomer, a hydroxy group-containing monomer, an amide group-containing monomer, and an amino group-containing monomer. In particular, from the standpoint that the acrylic adhesive composition of the present invention can exhibit better adhesion and better holding performance, the monomer containing a polar functional group preferably includes at least one selected from the group consisting of a carboxy group-containing monomer and a hydroxy group-containing monomer. In other words, the structural unit derived from a monomer containing a polar functional group preferably includes at least one selected from the group consisting of a structural unit derived from a carboxy group-containing monomer and a structural unit derived from a hydroxy group-containing monomer.

Each of these monomers containing a polar functional group may be used alone, or two or more of these may be used in combination.

Examples of the carboxy group-containing monomer include unsaturated carboxylic acids such as (meth)acrylic acid, (meth)acryloylacetic acid, (meth)acryloylpropionic acid, (meth)acryloylbutyric acid, (meth)acryloylpentanoic acid, crotonic acid, maleic acid, fumaric acid, citraconic acid, mesaconic acid, itaconic acid, and 2-carboxyethyl (meth)acrylate.

Examples of the hydroxy group-containing monomer include 4-hydroxybutyl (meth)acrylate and 2-hydroxyethyl (meth)acrylate.

Examples of the amide group-containing monomer include N-vinyl-2-pyrrolidone, N-vinylcaprolactam, (meth) acrylamide, N,N-dimethyl(meth)acrylamide, and N-isopropyl(meth)acrylamide.

Examples of the amino group-containing monomer include (meth)acryloylmorpholine, 2-dimethylaminoethyl (meth)acrylate, and 2-diethylaminoethyl (meth)acrylate.

The lower limit of the total proportion of the structural unit derived from a monomer containing a polar functional group in the acrylic copolymer is preferably 0.1% by mass, and the upper limit thereof is preferably 20% by mass. When the total proportion of the structural unit derived from a monomer containing a polar functional group is 0.1% by mass or more, the acrylic copolymer can have higher polarity, which increases the cohesion of the acrylic adhesive composition of the present invention, resulting in better holding performance at high temperature. Moreover, the polymerization reaction is more likely to proceed well. When the total proportion of the structural unit derived from a monomer containing a polar functional group is 20% by mass or less, the acrylic adhesive composition of the present invention is not excessively hard and can exhibit sufficient initial adhesion. The lower limit of the total proportion of the structural unit derived from a monomer containing a polar functional group is more preferably 1.0% by mass, and the upper limit thereof is more preferably 8.0% by mass. The lower limit is still more preferably 3.0% by mass.

It suffices that the acrylic copolymer includes the structural unit derived from an alkyl (meth)acrylate, the structural unit derived from an olefin polymer having a polymerizable unsaturated double bond at an end, and the structural unit derived from a monomer containing a polar functional group, but the acrylic copolymer may include a structural unit derived from a different monomer other than these structural units.

The lower limit of the weight average molecular weight (Mw) of the acrylic copolymer is preferably 500,000, and the upper limit thereof is preferably 2,000,000. When the weight average molecular weight of the acrylic copolymer is 500,000 or greater, the acrylic adhesive composition of the present invention can have higher cohesion and exhibit better holding performance at high temperature. When the weight average molecular weight of the acrylic copolymer is 2,000,000 or less, the acrylic adhesive composition of the present invention is not excessively hard and can have improved initial adhesion. The lower limit of the weight average molecular weight of the acrylic copolymer is more preferably 600,000, and the upper limit thereof is more preferably 1,500,000. The lower limit is still more preferably 800,000, and the upper limit is still more preferably 1,350,000.

The lower limit of the ratio of the weight average molecular weight (Mw) to the number average molecular weight (Mn) (polydispersity: Mw/Mn) of the acrylic copolymer is preferably 1.0, and the upper limit thereof is preferably 10.0. When the polydispersity of the acrylic copolymer is in the range, the acrylic adhesive composition of the present invention can exhibit better adhesion and better holding performance. The lower limit of the polydispersity of the acrylic copolymer is more preferably 1.5, and the upper limit thereof is more preferably 9.0. The lower limit is still more preferably 2.0, and the upper limit is still more preferably 8.0.

The weight average molecular weight (Mw) and the number average molecular weight (Mn) herein refer to the weight average molecular weight in terms of standard polystyrene measured by gel permeation chromatography (GPC). Specifically, the acrylic copolymer is diluted to 0.1% by mass with tetrahydrofuran (THF). The diluted solution is passed through a filter (material: polytetrafluoroethylene, pore size: 0.2 $\mu$m). The obtained filtrate is fed to a gel permeation chromatograph (e.g., 2690 Separations Module, available from Waters Corporation) and subjected to GPC measurement at a sample flow rate of 1 mL/min and a column temperature of 40°C to measure the molecular weight of the acrylic copolymer in terms of polystyrene, whereby the weight average molecular weight (Mw) and the number average molecular weight (Mn) are determined. The column may be GPC KF-806L (available from Showa Denko K.K.), for example. The detector may be a differential refractometer, for example. From the obtained weight average molecular weight (Mw) and the number average molecular weight (Mn), the polydispersity (Mw/Mn) can be obtained.

The weight average molecular weight of the acrylic copolymer can be adjusted by, for example, a method of changing the polymerization initiator or the monomer concentration in the polymerization reaction, a method of adding a small amount of a chain transfer agent, such as dodecyl mercaptan, or a method of changing the type of a polymerization reaction solvent and thereby controlling the chain transfer to the solvent.

The glass transition temperature (Tg) of the acrylic copolymer is preferably in the range of -100°C or higher and 200°C or lower. The upper limit thereof is more preferably -20°C. When the glass transition temperature of the acrylic copolymer is - 20°C or lower, the molecules of the acrylic copolymer can more easily stretch, and thus the acrylic adhesive composition of the present invention can exhibit better adhesion. The upper limit of the glass transition temperature of the acrylic copolymer is still more preferably -25°C, further more preferably -30°C. In the case that the acrylic copolymer has multiple glass transition temperatures, more preferably, all the glass transition temperatures are -20°C or lower. In the case that the acrylic adhesive composition of the present invention contains a plurality of the acrylic copolymers, more preferably, all the acrylic copolymers have a glass transition temperature of -20°C or lower.

The glass transition temperature herein can be measured by differential scanning calorimetry. Specifically, the glass transition temperature of the acrylic copolymer can be measured using, for example, a differential scanning calorimeter (e.g., 220C, available from Seiko Instruments Inc.) under a nitrogen atmosphere (nitrogen flow, flow rate 50 mL/min) by a method in conformity with JIS K6240:2011 at a measurement temperature from -100°C to 200°C and a

temperature increase rate of 10°C/min.

The glass transition temperature of the acrylic copolymer can be adjusted by adjusting the types or amounts of the monomers as raw materials of the acrylic copolymer.

The lower limit of the proportion of the acrylic copolymer in the acrylic adhesive composition of the present invention is preferably 40% by mass. When the proportion of the acrylic copolymer is 40% by mass or more, the acrylic adhesive composition of the present invention can exhibit better adhesion. The lower limit of the proportion of the acrylic copolymer is more preferably 50% by mass, still more preferably 55% by mass.

The upper limit of the proportion of the acrylic copolymer is preferably 99.5% by mass, because components other than the acrylic copolymer are preferably added to adjust the adhesion.

The acrylic copolymer can be synthesized using a conventionally known polymerization method that involves radical reaction of a monomer mixture as a raw material in the presence of a polymerization initiator. Examples of the method include solution polymerization (boiling point polymerization or constant temperature polymerization), emulsion polymerization, suspension polymerization, and bulk polymerization. Preferred among these is solution polymerization because it enables easy synthesis.

In the case that the polymerization method is solution polymerization, examples of the reaction solvent include ethyl acetate, toluene, methyl ethyl ketone, methylsulfoxide, ethanol, acetone, diethyl ether, and cyclohexane. Each of these reaction solvents may be used alone, or two or more of these may be used in combination.

Examples of the polymerization initiator include organic peroxides and azo compounds.

Examples of the organic peroxides include 1,1-bis(t-hexylperoxy)-3,3,5-trimethylcyclohexane, t-hexyl peroxypivalate, t-butyl peroxypivalate, 2,5-dimethyl-2,5-bis(2-ethylhexanoylperoxy)hexane, t-hexyl peroxy-2-ethylhexanoate, t-butyl peroxy-2-ethylhexanoate, t-butyl peroxyisobutyrate, t-butyl peroxy-3,5,5-trimethylhexanoate, and t-butyl peroxylaurate.

Examples of the azo compounds include azobisisobutyronitrile and azobiscyclohexanecarbonitrile.

Each of these polymerization initiators may be used alone, or two or more of these may be used in combination.

The acrylic adhesive composition of the present invention contains a solvent.

In the acrylic adhesive composition of the present invention, the solvent includes at least one solvent selected from the group consisting of a hydrocarbon solvent and a solvent having an SP value of 7.2 $(J/cm^3)^{1/2}$ or greater and 8.6 $(J/cm^3)^{1/2}$ or less. When the solvent includes at least one selected from the group consisting of a hydrocarbon solvent and a solvent having an SP value of 7.2 $(J/cm^3)^{1/2}$ or greater and 8.6 $(J/cm^3)^{1/2}$ or less, the applicability of the acrylic adhesive composition of the present invention can be improved.

Herein the "SP value", also called solubility parameter, is an index of the compatibility between substances that is calculated using the Fedors method (R. F. Fedors, Polym. Eng. Sci., 14(2), 147-154(1974)).

In the case that the solvent in the acrylic adhesive composition of the present invention includes the hydrocarbon solvent, the hydrocarbon solvent preferably includes an aliphatic hydrocarbon solvent. When the hydrocarbon solvent includes an aliphatic hydrocarbon solvent, the volatile organic compound (VOC) content in the solvent can be reduced, which reduces the volatile organic compound (VOC) that remains in the adhesive or adhesive layer formed from the acrylic adhesive composition of the present invention, resulting in less impact on the human body.

The aliphatic hydrocarbon solvent preferably includes a C6-C9 aliphatic hydrocarbon compound. When the aliphatic hydrocarbon solvent includes a C6-C9 aliphatic hydrocarbon compound, the acrylic adhesive composition of the present invention can have higher adhesion and better holding performance.

Examples of the C6-C9 aliphatic hydrocarbon compound include normal hexane, cyclohexane, methylcyclohexane, normal heptane, cycloheptane, methylcycloheptane, normal octane, cyclooctane, methylcyclooctane, normal nonane, and cyclononane. The aliphatic hydrocarbon solvent preferably includes at least one selected from the group consisting of normal hexane, cyclohexane, and methylcyclohexane, more preferably at least one selected from the group consisting of cyclohexane and methylcyclohexane.

In the case that the solvent in the acrylic adhesive composition of the present invention includes the solvent having an SP value of 7.2 $(J/cm^3)^{1/2}$ or greater and 8.6 $(J/cm^3)^{1/2}$ or less, the lower limit of the SP value of this solvent is preferably 7.4 $(J/cm^3)^{1/2}$, and the upper limit thereof is preferably 8.4 $(J/cm^3)^{1/2}$. When the SP value of the solvent is in the range, the acrylic adhesive composition of the present invention can have better applicability. The lower limit of the SP value of the solvent is more preferably 7.6 $(J/cm^3)^{1/2}$, and the upper limit thereof is more preferably 8.2 $(J/cm^3)^{1/2}$.

Examples of the solvent having an SP value of 7.2 $(J/cm^3)^{1/2}$ or greater and 8.6 $(J/cm^3)^{1/2}$ or less include hydrocarbon solvents and ether solvents. Specific examples include normal hexane (SP value: 7.28 $(J/cm^3)^{1/2}$), cyclohexane (SP value: 8.06 $(J/cm^3)^{1/2}$), methylcyclohexane (SP value: 7.92 $(J/cm^3)^{1/2}$), decahydronaphthalene (SP value: 8.53 $(J/cm^3)^{1/2}$), and diethyl ether (SP value: 7.25 $(J/cm^3)^{1/2}$).

In the acrylic adhesive composition of the present invention, preferably, the hydrocarbon solvent includes no aromatic hydrocarbon solvent, or the hydrocarbon solvent includes an aromatic hydrocarbon solvent and the aromatic hydrocarbon solvent is present at a concentration of 1,000 ppm or less in the solvent. When the concentration of the aromatic hydrocarbon solvent is 1,000 ppm or less, the volatile organic compound (VOC) content in the solvent can be

reduced, resulting in less impact on the human body. The upper limit of the concentration of the aromatic hydrocarbon solvent is more preferably 700 ppm, still more preferably 200 ppm. The hydrocarbon solvent most preferably includes no aromatic hydrocarbon solvent.

In the acrylic adhesive composition of the present invention, the solvent may further include at least one solvent selected from the group consisting of an ester solvent and a solvent having an SP value of greater than 8.6 $(J/cm^3)^{1/2}$ and 9.0 $(J/cm^3)^{1/2}$ or less. When the solvent includes an ester solvent and a solvent having an SP value of greater than 8.6 $(J/cm^3)^{1/2}$ and 9.0 $(J/cm^3)^{1/2}$ or less, the solubility of the acrylic copolymer in the solvent can be further improved, and thus the applicability of the acrylic adhesive composition of the present invention can be further improved.

In the case that the solvent in the acrylic adhesive composition of the present invention includes an ester solvent, the ester solvent preferably includes an ester compound represented by the formula (1). When the ester solvent includes an ester compound represented by the formula (1), the applicability of the acrylic adhesive composition of the present invention can be further improved.

In the formula (1), the aliphatic hydrocarbon groups represented by $R^1$ and $R^2$ may be saturated or unsaturated. The aliphatic hydrocarbon groups represented by $R^1$ and $R^2$ may be linear, branched, or cyclic. In the case of a cyclic aliphatic hydrocarbon group, the hydrocarbon group may be unsubstituted, or specific hydrogen atom(s) thereof may be replaced with alkyl group(s).

In the acrylic adhesive composition of the present invention, the proportion of the hydrocarbon solvent is preferably 5.0% by mass or more and less than 100% by mass in the total amount of the hydrocarbon solvent and the ester solvent contained. When the proportion of the hydrocarbon solvent is 5.0% by mass or more, the acrylic adhesive composition of the present invention can exhibit higher adhesion. When the proportion of the hydrocarbon solvent is less than 100% by mass, the applicability of the acrylic adhesive composition of the present invention can be further improved. The lower limit of the proportion of the hydrocarbon solvent is more preferably 10% by mass, and the upper limit thereof is more preferably 90% by mass. The lower limit is still more preferably 20% by mass, and the upper limit is still more preferably 80% by mass.

In the case that the solvent in the acrylic adhesive composition of the present invention includes the solvent having an SP value of greater than 8.6 $(J/cm^3)^{1/2}$ and 9.0 $(J/cm^3)^{1/2}$ or less, the lower limit of the SP value of this solvent is preferably 8.7 $(J/cm^3)^{1/2}$, and the upper limit thereof is preferably 8.8 $(J/cm^3)^{1/2}$. When the SP value of the solvent is in the range, the applicability of the acrylic adhesive composition of the present invention can be further improved.

Examples of the solvent having an SP value of greater than 8.6 $(J/cm^3)^{1/2}$ and 9.0 $(J/cm^3)^{1/2}$ or less include ester solvents and ketone solvents. Specific examples include ethyl acetate (SP value: 8.74 $(J/cm^3)^{1/2}$), methyl acetate (SP value: 8.77 $(J/cm^3)^{1/2}$), and methyl ethyl ketone (SP value: 8.98 $(J/cm^3)^{1/2}$).

The acrylic adhesive composition of the present invention may further contain a tackifier resin. When the acrylic adhesive composition of the present invention contains a tackifier resin, the acrylic adhesive composition of the present invention can exhibit better adhesion.

The tackifier resin preferably includes a high-hydroxyl-value tackifier resin having a hydroxyl value of 15 mg KOH/g or greater. When the tackifier resin includes a high-hydroxyl-value tackifier resin, the high-hydroxyl-value tackifier resin, which has a high polarity, tends not to be compatible with the low-polarity structural unit derived from an olefin polymer having a polymerizable unsaturated double bond at an end. As a result, the high-hydroxyl-value tackifier resin does not inhibit the formation of pseudo-crosslinking points by the interactions between the low-polarity structural units derived from an olefin polymer having a polymerizable unsaturated double bond at an end. Thus, the acrylic adhesive composition of the present invention can exhibit better adhesion.

Examples of the high-hydroxyl-value tackifier resin include terpene phenol resins and rosin resins.

Each of these high-hydroxyl-value tackifier resins may be used alone, or two or more of these may be used in combination.

Examples of the rosin resins include Pensel D-135, Super Ester A-125, Pinecrystal KE359 (all available from Arakawa Chemical Industries Ltd.), Pentalyn C (available from Eastman Chemical Company), and SYLVALITE 2115 (available from Kraton).

Example of the terpene phenol resin include YS Polyster G150, YS Polyster T160, YS Polyster T145, YS Polyster TH130, YS Polyster UH115, YS Polyster K125, and YS Polyster U130 (all available from Yasuhara Chemical Co., Ltd.) and SYLVARES 1150 and SYLVARES TP7042 (both available from Kraton).

The hydroxyl value of the high-hydroxyl-value tackifier resin needs only to be 15 mg KOH/g or greater, but from the standpoint of enhancing the interactions with adherends, the lower limit of the hydroxyl value is preferably 20 mg KOH/g, more preferably 40 mg KOH/g.

From the standpoint of the compatibility with the acrylic copolymer, the upper limit of the hydroxyl value of the high-hydroxyl-value tackifier resin is preferably 300 mg KOH/g, more preferably 200 mg KOH/g.

The tackifier resin may include a low-hydroxyl-value tackifier resin having a hydroxyl value of less than 15 mg KOH/g.

Examples of the low-hydroxyl-value tackifier resin include terpene phenol resins, aromatic modified terpene

resins, petroleum resins, and styrene resins.

Each of these low-hydroxyl-value tackifier resins may be used alone, or two or more of these may be used in combination.

Examples of the terpene resins include YS Resin PX1250, YS Resin PX1150, and YS Resin PX1000 (all available from Yasuhara Chemical Co., Ltd.) and SYLVARES 3125 (available from Kraton).

Examples of the aromatic modified terpene resins include YS Resin TO125 (available from Yasuhara Chemical Co., Ltd.).

Examples of the petroleum resins include Arkon P125 and Arkon P140 (both available from Arakawa Chemical Industries Ltd.), Quintone RX110 (available from Zeon Corporation), Petcoal 130 (available from Tosoh Corporation), and Petrotack 100V (available from Tosoh Corporation).

Examples of the styrene resin include YS Resin SX100 (available from Yasuhara Chemical Co., Ltd.).

The hydroxyl value of the low-hydroxyl-value tackifier resin needs only to be less than 15 mg KOH/g, but from the standpoint of the adhesiveness of the acrylic adhesive composition of the present invention to low-polarity adherends, the upper limit of the hydroxyl value is preferably 10 mg KOH/g, more preferably 5 mg KOH/g, most preferably 0 mg KOH/g.

The upper limit of the amount of the tackifier resin contained relative to 100 parts by mass of the acrylic copolymer is preferably 40.0 parts by mass. When the amount of the tackifier resin contained is 40.0 parts by mass or less, the acrylic adhesive composition of the present invention can easily maintain adhesion. The upper limit of the amount of the tackifier resin contained is more preferably 30.0 parts by mass.

The lower limit of the amount of the tackifier resin contained is preferably 5.0 parts by mass. When the amount of the tackifier resin contained is 5.0 parts by mass or more, the acrylic adhesive composition of the present invention can exhibit higher adhesion. The lower limit of the amount of the tackifier resin contained is more preferably 10.0 parts by mass.

The acrylic adhesive composition of the present invention preferably further contains a crosslinking agent. When the acrylic adhesive composition of the present invention contains a crosslinking agent, the acrylic copolymer forms a crosslinked structure via the crosslinking agent, and thereby increases the later-described gel fraction of the adhesive layer. The gel fraction thus can be more easily adjusted to the range described above, and the holding performance at high temperature can be further improved.

From the standpoint of storage stability and the like, the crosslinking agent may be blended with the acrylic adhesive composition of the present invention immediately before the adhesive layer is formed.

Examples of the crosslinking agent include epoxy crosslinking agents and isocyanate crosslinking agents. Preferred among these are isocyanate crosslinking agents because they make it easier to adjust the later-described gel fraction of the adhesive layer to the range described above.

The lower limit of the amount of the crosslinking agent contained is preferably 0.01 parts by mass, and the upper limit thereof is preferably 10 parts by mass, relative to 100 parts by mass of the acrylic copolymer. When the amount of the crosslinking agent contained is in the range, the later-described gel fraction of the adhesive layer can be easily adjusted to the range described above, and the holding performance at high temperature can be further improved. The lower limit of the amount of the crosslinking agent contained is more preferably 0.1 parts by mass, and the upper limit thereof is more preferably 2.0 parts by mass.

The acrylic adhesive composition of the present invention may contain conventionally known fine particles or additives such as inorganic fine particles, conductive fine particles, antioxidants, foaming agents, organic fillers, or inorganic fillers, if necessary.

The acrylic adhesive composition of the present invention may be produced using any method and may be produced using a conventionally known method. For example, first, the alkyl (meth)acrylate, the olefin polymer having a polymerizable unsaturated double bond at an end, the monomer containing a polar functional group, and if necessary other monomer(s) are copolymerized using a conventional method to give the acrylic copolymer. Next, the obtained acrylic copolymer is mixed with the solvent and if necessary the tackifier resin, the crosslinking agent, and/or other additive(s), whereby the acrylic adhesive composition can be obtained.

The lower limit of the solid content of the acrylic adhesive composition of the present invention is 15% by mass, and the upper limit thereof is 50% by mass. When the solid content of the acrylic adhesive composition of the present invention is 15% by mass or more, the acrylic adhesive composition of the present invention can have excellent applicability. When the solid content of the acrylic adhesive composition of the present invention is 50% by mass or less, the acrylic adhesive composition of the present invention can exhibit high adhesion. The lower limit of the solid content of the acrylic adhesive composition of the present invention is preferably 20% by mass, and the upper limit thereof is preferably 45% by mass. The lower limit is more preferably 25% by mass, and the upper limit is more preferably 40% by mass.

The "solid of the acrylic adhesive composition" herein refers to components of the acrylic adhesive composition excluding the solvent.

The acrylic adhesive composition of the present invention is used in an adhesive layer that constitutes an adhesive tape or an adhesive.

The present invention also encompasses an adhesive formed from the acrylic adhesive composition of the present invention and an adhesive tape including an adhesive layer formed from the acrylic adhesive composition of the present invention.

The adhesive of the present invention may be, for example, a liquid adhesive, a paste adhesive, or the like. In particular, the adhesive of the present invention is preferably a liquid adhesive to have excellent applicability.

The adhesive of the present invention can be produced by, for example, heating and drying the acrylic adhesive composition in the form of a solution obtained using the above-described method. Alternatively, the adhesive of the present invention can also be produced by sufficiently mixing the acrylic adhesive composition in the form of a solution obtained using the above-described method, and subsequently subjecting it to treatment such as UV or electron beam irradiation.

The adhesive tape of the 19th embodiment of the present invention includes an adhesive layer formed from the acrylic adhesive composition.

The adhesive layer in the adhesive tape of the 19th embodiment of the present invention has good appearance without lines or streaks.

The present invention also encompasses an adhesive tape including an adhesive layer formed using an acrylic adhesive composition, the acrylic adhesive composition containing an acrylic copolymer, the acrylic copolymer including a structural unit derived from an alkyl (meth)acrylate and a structural unit derived from an olefin polymer having a polymerizable unsaturated double bond at an end, the adhesive layer containing a solvent, the solvent including an aliphatic hydrocarbon solvent.

The adhesive tape of the 20th embodiment of the present invention has good appearance without lines or streaks.

The acrylic adhesive composition in the adhesive tape of the 20th embodiment of the present invention may be any acrylic adhesive composition as long as it contains an acrylic copolymer including a structural unit derived from an alkyl (meth)acrylate and a structural unit derived from an olefin polymer having a polymerizable unsaturated double bond at an end. For example, it may be the above-described acrylic adhesive composition of the present invention.

The acrylic copolymer in the adhesive tape of the 20th embodiment of the present invention may be, for example, the acrylic copolymer in the above-described acrylic adhesive composition of the present invention. From the standpoint of improving the adhesion, the acrylic copolymer in the adhesive tape of the 20th embodiment of the present invention preferably includes a structural unit derived from a monomer containing a polar functional group.

The structural unit derived from a monomer containing a polar functional group in the adhesive tape of the 20th embodiment of the present invention may be, for example, the structural unit derived from a monomer containing a polar functional group in the acrylic copolymer in the above-described acrylic adhesive composition of the present invention.

The adhesive tape of the 20th embodiment of the present invention contains a solvent.

The solvent in the adhesive tape of the 20th embodiment of the present invention includes an aliphatic hydrocarbon solvent. When the solvent in the adhesive tape of the 20th embodiment of the present invention includes an aliphatic hydrocarbon solvent, the adhesive layer can have good appearance without lines or streaks.

In the case that the adhesive layer of the adhesive tape of the present invention contains a solvent, the adhesive layer may contain any amount of solvent, including trace amounts, as long as the adhesive layer is formed. A preferable specific range of the solvent concentration in the adhesive layer is from 1.0 ppm to 1,000 ppm.

The aliphatic hydrocarbon solvent in the adhesive tape of the 20th embodiment of the present invention may be, for example, the aliphatic hydrocarbon solvent in the above-described acrylic adhesive composition of the present invention.

The lower limit of the gel fraction of the adhesive layer is preferably 10% by mass, and the upper limit thereof is preferably 70% by mass. When the gel fraction of the adhesive layer is 10% by mass or more, the adhesive layer can have excellent cohesion, and the adhesive tape of the present invention can have further improved holding performance at high temperature. When the gel fraction of the adhesive layer is 70% by mass or less, the adhesive layer is not excessively hard, and the adhesive tape of the present invention can have sufficient initial adhesion. The lower limit of the gel fraction of the adhesive layer is more preferably 20% by mass, and the upper limit thereof is more preferably 60% by mass. The lower limit is still more preferably 25% by mass, and the upper limit is still more preferably 50% by mass.

The gel fraction herein is measured using the following method, for example.

Specifically, $W_0$ (g) of the adhesive layer is sampled, immersed in 50 mL of tetrahydrofuran (THF), and shaken with a shaker at 23°C at 200 rpm for 24 hours. After shaking, THF is separated from the adhesive layer swollen with THF by filtration using a metal mesh (opening #200 mesh, mass: $W_1$ (g)). The adhesive swollen with THF is dried at 110°C for one hour, and then the mass $W_2$ (g) of the adhesive layer including the metal mesh is measured. The gel fraction is calculated using the following equation (I).

$$\text{Gel fraction (\% by mass)} = 100 \times (W_2 - W_1)/W_0 \qquad \text{(I)}$$

($W_0$: initial mass of adhesive layer, $W_1$: mass of metal mesh, $W_2$: mass of adhesive layer after drying (including metal mesh))

The gel fraction of the adhesive layer can be adjusted to the range described above, for example, by methods including, but not limited to, a method of changing the type or amount of the crosslinking agent to be contained in the acrylic adhesive composition for forming the adhesive layer, and a method of adjusting the irradiation intensity or irradiation time in the case of performing electron beam or UV irradiation for forming the adhesive layer.

The lower limit of the concentration of the aliphatic hydrocarbon solvent in the adhesive layer is preferably 1.0 ppm, and the upper limit thereof is preferably 1,000 ppm. When the concentration of the aliphatic hydrocarbon solvent is 1.0 ppm or more, the flexibility of the adhesive tape of the present invention can be further improved. When the concentration of the aliphatic hydrocarbon solvent is 1,000 ppm or less, the adhesion and holding performance of the adhesive tape of the present invention can be further improved. The lower limit of the concentration of the aliphatic hydrocarbon solvent is more preferably 10 ppm, and the upper limit thereof is more preferably 800 ppm. The lower limit is still more preferably 50 ppm, and the upper limit is still more preferably 500 ppm.

Preferably, the adhesive layer contains no aromatic hydrocarbon solvent, or the adhesive layer contains an aromatic hydrocarbon solvent and the aromatic hydrocarbon solvent is present at a concentration of 300 ppm or less in the adhesive layer. When the concentration of the aromatic hydrocarbon solvent is 300 ppm or less, the adhesive layer has a low volatile organic compound (VOC) content, and the adhesive tape of the present invention can have even less impact on the human body. The upper limit of the concentration of the aromatic hydrocarbon solvent in the adhesive layer is more preferably 200 ppm, still more preferably 100 ppm. The adhesive layer most preferably contains no aromatic hydrocarbon solvent.

The concentration of the aliphatic hydrocarbon solvent or the aromatic hydrocarbon solvent in the adhesive layer can be measured by gas chromatography-mass spectrometry (GC/MS). The sol component of the adhesive layer is diluted to prepare a measurement sample, and the measurement sample is analyzed using a gas chromatograph-mass spectrometer. The content can be calculated from the resulting spectrum.

Specifically, the measurement is performed as follows. The aliphatic hydrocarbon solvent or the aromatic hydrocarbon solvent contained in the adhesive layer is identified, and using the pure substance of the identified aliphatic hydrocarbon solvent or aromatic hydrocarbon solvent as the known reference, gas chromatography-mass spectrometry (GC-MS) measurement is performed on the measurement sample, which is obtained by diluting the sol component of the adhesive layer with chloroform. A calibration curve is prepared using the measured peak areas, and the concentration of the aliphatic hydrocarbon solvent or the aromatic hydrocarbon solvent is calculated using the obtained calibration curve.

The "sol component" refers to the component remaining after removing the gel component from the adhesive layer. The sol component of the adhesive layer can be obtained, for example, by immersing the adhesive layer in tetrahydrofuran (THF) at 23°C for 24 hours and filtering out the undissolved component through a metal mesh (200 mesh) to remove the gel component.

The measurement conditions for the gas chromatography-mass spectrometry are as follows, for example.

<GC-MS measurement conditions>

Gas chromatograph-mass spectrometer: JMS Q1500 (available from JEOL Ltd.)

Mobile phase: helium
Helium flow rate: 1.0 mL/min
Detector: quadrupole mass spectrometer
Ionization method: EI
Column: SLB-5ms capillary GC column (available from Sigma-Aldrich)
Inlet temperature: 320 °C
Column temperature: 40°C to 340°C
Injection volume: 1.0 μL

The lower limit of the thickness of the adhesive layer is preferably 5 μm, and the upper limit thereof is preferably 500 μm. When the thickness of the adhesive layer is 5 μm or greater, the adhesive tape of the present invention can easily have good adhesion to adherends. When the thickness of the adhesive layer is 500 μm or less, high productivity can be easily achieved in the production of the adhesive tape. The lower limit of the thickness of the adhesive layer is more preferably 10 μm, and the upper limit thereof is more preferably 300 μm. The lower limit is still more preferably 20 μm, and the upper limit is still more preferably 200 μm.

The thickness herein can be measured using a dial thickness gauge (e.g., ABS Digimatic Indicator, available from Mitutoyo Corporation).

The adhesive tape of the present invention may be a non-supported tape including no substrate, or may be a

supported tape including a substrate. In particular, from the standpoint of easy re-attachment of the adhesive tape of the present invention, the adhesive tape of the present invention preferably includes a substrate.

In the case that the adhesive tape of the present invention includes a substrate, the adhesive tape may be a one-sided adhesive tape including an adhesive layer on one side of the substrate, or may be a double-sided adhesive tape including adhesive layers on both sides of the substrate.

The lower limit of the thickness of the substrate is preferably 1.0 μm, and the upper limit thereof is preferably 1,000 μm. When the thickness of the substrate is 1.0 μm or greater, the adhesive tape can have good processability. When the thickness of the substrate is 1,000 μm or less, the flexibility of the adhesive tape can be improved. The lower limit of the thickness of the substrate is more preferably 5.0 μm, and the upper limit thereof is more preferably 500 μm. The lower limit is still more preferably 10 μm, and the upper limit is still more preferably 300 μm.

The adhesive tape of the present invention may further include a different layer as long as the effects of the present invention are not impaired.

The adhesive tape of the present invention can be produced, for example, by applying the acrylic adhesive composition in the form of a solution obtained using the above-described method to the release-treated side of a release-treated film, and drying the solution to form an adhesive layer. Alternatively, the adhesive tape produced by the above-described method may be used as an adhesive layer and bonded to a substrate to provide an adhesive tape including the substrate.

Alternatively, the adhesive tape of the present invention can be produced, for example, by sufficiently mixing the acrylic adhesive composition in the form of a solution obtained using the above-described method, applying the solution to the release-treated side of a release-treated film, performing treatment such as heating or UV or electron beam irradiation, followed by drying to form an adhesive layer formed from the acrylic adhesive composition.

The present invention also encompasses a method for producing an adhesive tape, including a step of applying the acrylic adhesive composition.

The lower limit of the total thickness of the adhesive tape of the present invention is preferably 10 μm, and the upper limit thereof is preferably 2,000 μm. When the total thickness of the adhesive tape of the present invention is 10 μm or greater, the adhesive tape of the present invention can be more easily attached. The lower limit of the total thickness of the adhesive tape of the present invention is more preferably 20 μm, and the upper limit thereof is more preferably 1,000 μm. The lower limit is still more preferably 30 μm, and the upper limit is still more preferably 800 μm.

The adhesive and adhesive tape of the present invention can be used in any applications. For example, they can be used for fixing components in electronic devices, vehicles, housing, building materials, and the like.

The present invention also encompasses a method for producing an acrylic copolymer, including a step of polymerizing a monomer mixture containing an alkyl (meth)acrylate and an olefin polymer having a polymerizable unsaturated double bond at an end in a solvent in the presence of a polymerization initiator (hereinafter also simply referred to as "the step (i)"), the solvent including a hydrocarbon solvent.

The solution containing the acrylic copolymer obtained using the acrylic copolymer production method of the present invention has excellent applicability and excellent adhesion, and thus can be used as-is as an acrylic adhesive composition.

The alkyl (meth)acrylate and the olefin polymer having a polymerizable unsaturated double bond at an end in the acrylic copolymer production method of the present invention may be the same as those usable in the acrylic adhesive composition of the present invention.

The solvent in the acrylic copolymer production method of the present invention includes a hydrocarbon solvent. When the solvent includes a hydrocarbon solvent, the olefin polymer having a polymerizable unsaturated double bond at an end can be uniformly introduced into the acrylic copolymer.

The hydrocarbon solvent preferably includes an aliphatic hydrocarbon solvent. When the hydrocarbon solvent includes an aliphatic hydrocarbon solvent, the acrylic copolymer can be produced using less volatile organic compounds (VOCs), resulting in less impact on the human body.

The aliphatic hydrocarbon solvent in the acrylic copolymer production method of the present invention preferably includes a C6-C9 aliphatic hydrocarbon compound. When the aliphatic hydrocarbon solvent includes a C6-C9 aliphatic hydrocarbon compound, the olefin polymer having a polymerizable unsaturated double bond at an end can be more uniformly introduced into the acrylic copolymer.

Examples of the C6-C9 aliphatic hydrocarbon compound in the acrylic copolymer production method of the present invention include normal hexane, cyclohexane, methylcyclohexane, normal heptane, cycloheptane, methylcycloheptane, normal octane, cyclooctane, methylcyclooctane, normal nonane, and cyclononane. In particular, the aliphatic hydrocarbon solvent preferably includes at least one selected from the group consisting of normal hexane, cyclohexane, and methylcyclohexane.

In the acrylic copolymer production method of the present invention, the upper limit of the concentration of the aromatic hydrocarbon solvent in the solvent is preferably 300 ppm. When the concentration of the aromatic hydrocarbon solvent is 300 ppm or less, the acrylic copolymer can be produced using less volatile organic compounds (VOCs), resulting

in less impact on the human body. The upper limit of the concentration of the aromatic hydrocarbon solvent is more preferably 200 ppm, still more preferably 100 ppm. The solvent most preferably includes no aromatic hydrocarbon solvent.

The solvent in the acrylic copolymer production method of the present invention may include an ester solvent. When the solvent includes an ester solvent, the solution containing the acrylic copolymer obtained using the acrylic copolymer production method of the present invention can have further improved applicability and be more suitably used as an acrylic adhesive composition.

The ester solvent in the acrylic copolymer production method of the present invention preferably includes an ester compound represented by the formula (1). When the ester solvent includes an ester compound represented by the formula (1), the solution containing the acrylic copolymer obtained using the acrylic copolymer production method of the present invention can have further improved applicability and be more suitably used as an acrylic adhesive composition.

In the acrylic copolymer production method of the present invention, the proportion of the hydrocarbon solvent is preferably 5.0% by mass or more and less than 100% by mass in the total amount of the hydrocarbon solvent and the ester solvent contained. When the proportion of the hydrocarbon solvent is in the range, the solution containing the acrylic copolymer obtained using the acrylic copolymer production method of the present invention can have further improved applicability and be more suitably used as an acrylic adhesive composition. The lower limit of the proportion of the hydrocarbon solvent is more preferably 10% by mass, and the upper limit thereof is more preferably 90% by mass. The lower limit is still more preferably 20% by mass, and the upper limit is still more preferably 80% by mass.

Examples of the polymerization initiator in the step (i) include organic peroxides and azo compounds.

Examples of the organic peroxides include 1,1-bis(t-hexylperoxy)-3,3,5-trimethylcyclohexane, t-hexyl peroxypivalate, t-butyl peroxypivalate, 2,5-dimethyl-2,5-bis(2-ethylhexanoylperoxy)hexane, t-hexyl peroxy-2-ethylhexanoate, t-butyl peroxy-2-ethylhexanoate, t-butyl peroxyisobutyrate, t-butyl peroxy-3,5,5-trimethylhexanoate, and t-butyl peroxylaurate.

Examples of the azo compounds include azobisisobutyronitrile and azobiscyclohexanecarbonitrile.

Each of these polymerization initiators may be used alone, or two or more of these may be used in combination.

The lower limit of the amount of the polymerization initiator blended relative to 100 parts by mass of the monomer mixture is preferably 0.01 parts by mass, and the upper limit thereof is preferably 3.0 parts by mass. When the amount of the polymerization initiator blended is in the range, the weight average molecular weight of the acrylic copolymer can be more appropriately adjusted. The lower limit of the amount of the polymerization initiator blended is more preferably 0.03 parts by mass, and the upper limit thereof is more preferably 2.0 parts by mass. The lower limit is still more preferably 0.05 parts by mass, and the upper limit is still more preferably 1.0 parts by mass.

In the step (i), the lower limit of the temperature at which the monomer mixture is polymerized in the solvent in the presence of the polymerization initiator (hereinafter also simply referred to as "the polymerization reaction temperature") is preferably 50°C, and the upper limit thereof is preferably 100°C. When the polymerization reaction temperature is in the range, the weight average molecular weight of the acrylic copolymer can be more appropriately adjusted. The lower limit of the polymerization reaction temperature is more preferably 55°C, and the upper limit thereof is more preferably 95°C. The lower limit is still more preferably 60°C, and the upper limit is still more preferably 90°C.

- Advantageous Effects of Invention

The present invention can provide an acrylic adhesive composition that has excellent applicability to enable application without lines or streaks and that can exhibit high adhesion. The present invention can also provide an adhesive formed from the adhesive composition and an adhesive tape formed from the acrylic adhesive composition. The present invention can also provide an adhesive tape having good appearance without lines or streaks. The present invention can also provide a method for producing an adhesive tape formed from the acrylic adhesive composition. The present invention can also provide a method for producing an acrylic copolymer, the acrylic copolymer being usable in an acrylic adhesive composition that has excellent applicability to enable application without lines or streaks and that can exhibit high adhesion.

## BRIEF DESCRIPTION OF DRAWINGS

FIG. 1 is a schematic view illustrating a method for evaluating holding performance at high temperature.

## DESCRIPTION OF EMBODIMENTS

In the following, embodiments of the present invention are described in more detail with reference to examples. The present invention should not be limited to these examples.

(Synthesis of acrylic copolymer A)

A reaction vessel equipped with a thermometer, a stirrer, and a condenser was charged with cyclohexane and ethyl acetate as solvents, and the monomer mixture shown in Table 1 was added (the concentration of the monomer mixture: 35% by mass). Subsequently, nitrogen gas was introduced to purge dissolved oxygen before the reaction vessel was heated to 60°C under nitrogen gas flow. Subsequently, 0.1 parts by mass of azobisisobutyronitrile as a polymerization initiator was added into the reaction vessel relative to 100 parts by mass of the monomer mixture, and polymerization was started at a constant temperature of 60°C. Then, four hours after the start of the polymerization, 0.5 parts by mass of t-hexyl peroxypivalate was added relative to 100 parts by mass of the monomer mixture to allow the polymerization reaction to continue. A total of six hours of polymerization reaction was performed from the start of polymerization, whereby a solution containing an acrylic copolymer A was obtained. The ethylene-butylene macromonomer shown in Table 1 was HPVM-L1253 (available from Kraton Polymers Japan, weight average molecular weight: 7,000).

The obtained acrylic copolymer A was subjected to measurement of the weight average molecular weight (Mw) thereof using a gel permeation chromatograph (GPC) (2690 Separations Module, available from Waters Corporation) under the conditions below, and the polydispersity of the acrylic copolymer was calculated. Table 1 shows the results.

<GPC measurement conditions>

Solvent: tetrahydrofuran
Sample flow rate: 1 mL/min
Detector: refractive index detector RI
Column: GPC KF-806L (available from Showa Denko K.K.)
Column temperature (measurement temperature): 40°C
Injection volume: 20 μL

(Synthesis of acrylic copolymers B to R)

The acrylic copolymers B to R were synthesized and subjected to the measurement of the weight average molecular weight and the polydispersity in the same manner as the acrylic copolymer A, except that the respective monomer mixtures shown in Table 1 were used. Table 1 shows the results.

The solvents used in the polymerization reaction, the types and amounts of the polymerization initiators, and the polymerization reaction temperatures in the synthesis of the acrylic copolymers in the examples and comparative examples were as shown in Tables 2 to 4. The azobisisobutyronitrile and t-hexyl peroxypivalate were added in the same order as in the synthesis of the acrylic copolymer A.

The weight average molecular weights of the acrylic copolymers O and P were adjusted by adjusting the concentration of the monomer mixture in the polymerization reaction. In the synthesis of the acrylic copolymer O (Example 16), the polymerization was performed at a concentration of the monomer mixture of 30% by mass, and in the synthesis of the acrylic copolymer P (Example 17), the polymerization was performed at a concentration of the monomer mixture of 40% by mass, to adjust the weight average molecular weights of the acrylic copolymers.

[Table 1]

| | | Acrylic copolymer | | | | | | | | | | | | | | | | | |
|---|---|---|---|---|---|---|---|---|---|---|---|---|---|---|---|---|---|---|---|
| | | A | B | C | D | E | F | G | H | I | J | K | L | M | N | O | P | Q | R |
| Structural unit monomer (% by mass) | Methyl acrylate | - | - | - | - | - | - | - | - | - | - | - | - | - | - | - | - | 15.0 | - |
| | n-Butyl acrylate | 90.9 | 88.9 | 83.9 | 73.9 | 63.9 | 53.9 | - | 36.95 | - | - | - | 80.0 | 74.0 | 78.0 | 73.9 | 73.9 | 58.9 | 93.9 |
| | n-Hexyl acrylate | - | - | - | - | - | - | - | - | 73.9 | - | - | - | - | - | - | - | - | - |
| | n-Heptyl acrylate | - | - | - | - | - | - | - | - | - | 73.9 | - | - | - | - | - | - | - | - |
| | 1-Methylheptyl acrylate | - | - | - | - | - | - | - | - | - | - | 73.9 | - | - | - | - | - | - | - |
| | 2-Ethylhexyl acrylate | - | - | - | - | - | - | 73.9 | 36.95 | - | - | - | - | - | - | - | - | - | - |
| | Ethylene-butylene macromonomer | 3.0 | 5.0 | 10.0 | 20.0 | 30.0 | 40.0 | 20.0 | 20.0 | 20.0 | 20.0 | 20.0 | 20.0 | 20.0 | 20.0 | 20.0 | 20.0 | 20.0 | - |
| | Acrylic acid | 6.0 | 6.0 | 6.0 | 6.0 | 6.0 | 6.0 | 6.0 | 6.0 | 6.0 | 6.0 | 6.0 | - | 6.0 | - | 6.0 | 6.0 | 6.0 | 6.0 |
| | 4-Hydroxybutyl acrylate | 0.1 | 0.1 | 0.1 | 0.1 | 0.1 | 0.1 | 0.1 | 0.1 | 0.1 | 0.1 | 0.1 | - | - | 2.0 | 0.1 | 0.1 | 0.1 | 0.1 |
| Weight average molecular weight of acrylic copolymer (in units of 10000) | | 90 | 90 | 90 | 90 | 90 | 90 | 90 | 90 | 90 | 90 | 90 | 90 | 90 | 90 | 60 | 130 | 90 | 90 |
| Polydispersity of acrylic copolymer (Mw/Mn) | | 5.0 | 5.0 | 5.0 | 5.0 | 5.0 | 5.0 | 5.0 | 5.0 | 5.0 | 5.0 | 5.0 | 5.0 | 5.0 | 5.0 | 4.0 | 6.0 | 5.0 | 5.0 |

[Table 2]

| | | | | Example | | | | | | | | | | | | | | | | | | | | | |
|---|---|---|---|---|---|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
| Type of synthesized acrylic copolymer | | | | A | B | C | D | E | F | D | G | H | I | J | K | L | M | N | O | P | Q | D | D | D | D |
| Solvent used in synthesis of acrylic copolymer | Hydrocarbon solvent | Aliphatic hydrocarbon solvent | Normal hexane | - | - | - | - | - | - | - | - | - | - | - | - | - | - | - | - | - | - | - | - | - | - |
| | | | Cyclohexane | ○ | ○ | ○ | ○ | ○ | ○ | ○ | ○ | ○ | ○ | ○ | ○ | ○ | ○ | ○ | ○ | ○ | ○ | ○ | ○ | ○ | ○ |
| | | | Methylcyclohexane | - | - | - | - | - | - | - | - | - | - | - | - | - | - | - | - | - | - | - | - | - | - |
| | | | Decahydronaphthalene | - | - | - | - | - | - | - | - | - | - | - | - | - | - | - | - | - | - | - | - | - | - |
| | | Aromatic hydrocarbon solvent | Toluene | - | - | - | - | - | - | - | - | - | - | - | - | - | - | - | - | - | - | - | - | - | - |
| | Ester solvent | Ethyl acetate | | ○ | ○ | ○ | ○ | ○ | ○ | - | ○ | ○ | ○ | ○ | ○ | ○ | ○ | ○ | ○ | ○ | ○ | ○ | ○ | ○ | ○ |
| | | Methyl acetate | | - | - | - | - | - | - | - | - | - | - | - | - | - | - | - | - | - | - | - | - | - | - |
| Amount of polymerization initiator blended (parts by mass) | Azobisisobutyronitrile | | | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| | t-Hexyl peroxypivalate | | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Polymerization reaction temperature (°C) | | | | 60 | 60 | 60 | 60 | 60 | 60 | 60 | 60 | 60 | 60 | 60 | 60 | 60 | 60 | 60 | 60 | 60 | 60 | 60 | 60 | 60 | 60 |

[Table 3]

| | | | Example | | | | | | | | | | | | | | | | | | | | | |
|---|---|---|---|---|---|---|---|---|---|---|---|---|---|---|---|---|---|---|---|---|---|---|---|---|
| | | | 23 | 24 | 25 | 26 | 27 | 28 | 29 | 30 | 31 | 32 | 33 | 34 | 35 | 36 | 37 | 38 | 39 | 40 | 41 | 42 | 43 | 44 |
| Type of synthesized acrylic copolymer | | | D | D | D | D | D | D | D | D | D | D | D | D | D | D | D | D | D | D | D | D | D | D |
| Solvent used in synthesis of acrylic copolymer | Hydrocarbon solvent | Aliphatic hydrocarbon solvent: Normal hexane | - | - | - | - | - | ○ | - | - | - | - | - | - | - | - | - | - | - | - | - | - | - | - |
| | | Aliphatic hydrocarbon solvent: Cyclohexane | ○ | ○ | ○ | ○ | ○ | - | - | - | ○ | ○ | ○ | ○ | ○ | ○ | ○ | ○ | ○ | ○ | - | ○ | ○ | ○ |
| | | Aliphatic hydrocarbon solvent: Methylcyclohexane | - | - | - | - | - | - | ○ | - | - | - | - | - | - | - | - | - | - | - | - | - | - | - |
| | | Aliphatic hydrocarbon solvent: Decahydronaphthalene | - | - | - | - | - | - | - | ○ | - | - | - | - | - | - | - | - | - | - | - | - | - | - |
| | | Aromatic hydrocarbon solvent: Toluene | - | - | - | - | - | - | - | - | - | - | - | - | - | - | - | ○ | ○ | ○ | ○ | - | - | - |
| | Ester solvent | Ethyl acetate | ○ | ○ | ○ | ○ | ○ | ○ | ○ | ○ | - | ○ | ○ | ○ | ○ | ○ | ○ | ○ | ○ | ○ | ○ | ○ | ○ | ○ |
| | | Methyl acetate | - | - | - | - | - | - | - | - | ○ | - | - | - | - | - | - | - | - | - | - | - | - | - |
| Amount of polymerization initiator blended (parts by mass) | Azobisisobutyronitrile | | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| | t-Hexyl peroxypivalate | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Polymerization reaction temperature (°C) | | | 60 | 60 | 60 | 60 | 60 | 60 | 60 | 60 | 60 | 60 | 60 | 60 | 60 | 60 | 60 | 60 | 60 | 60 | 60 | 60 | 60 | 60 |

[Table 4]

| | | | | Comparative Example | | | | |
|---|---|---|---|---|---|---|---|---|
| | | | | 1 | 2 | 3 | 4 | 5 |
| Type of synthesized acrylic copolymer | | | | R | R | D | D | D |
| Solvent used in synthesis of acrylic copolymer | Hydrocarbon solvent | Aliphatic hydrocarbon solvent | Normal hexane | - | - | - | - | - |
| | | | Cyclohexane | ○ | ○ | - | ○ | ○ |
| | | | Methylcyclohexane | - | - | - | - | - |
| | | | Decahydronaphthalene | - | - | - | - | - |
| | | Aromatic hydrocarbon solvent | Toluene | - | - | - | - | - |
| | Ester solvent | Ethyl acetate | | - | ○ | ○ | ○ | ○ |
| | | Methyl acetate | | - | - | - | - | - |
| Amount of polymerization initiator blended (parts by mass) | Azobisisobutyronitrile | | | 0.1 | 0.1 | 0.1 | 0.1 | 0.1 |
| | t-Hexyl peroxypivalate | | | 0.5 | 0.5 | 0.5 | 0.5 | 0.5 |
| Polymerization reaction temperature (°C) | | | | 60 | 60 | 60 | 60 | 60 |

(Example 1)

(Preparation of acrylic adhesive composition)

To the solution containing the acrylic copolymer A were added 20.0 parts by mass of YS Polyster G150 (available from Yasuhara Chemical Co., Ltd.) as a tackifier resin and 1.0 parts by mass of Desmodur L-75 (available from Covestro) as a crosslinking agent relative to 100 parts by mass of the solids in the solution. The solution containing the acrylic copolymer A was diluted such that 150 parts by mass of cyclohexane and 150 parts by mass of ethyl acetate were present relative to 100 parts by mass of the acrylic copolymer A, whereby an acrylic adhesive composition was obtained.

(Production of adhesive tape)

The acrylic adhesive composition in the form of a solution obtained was sufficiently stirred and then applied, using a doctor knife, onto the release-treated side of a 50-µm-thick polyethylene terephthalate (PET) release film having one release-treated side, and the applied solution was dried by heating at 110°C for 10 minutes to produce a 50-µm-thick adhesive layer formed from the acrylic adhesive composition. Furthermore, a 25-µm-thick PET release film having one release-treated side was provided. The formed adhesive layer was placed on the release-treated side and aged in a 40°C environment for 48 hours, whereby an adhesive tape including the PET release films was obtained.

(Measurement of gel fraction of adhesive layer)

$W_0$ (g) of the adhesive layer of the obtained adhesive tape was sampled, immersed in 50 mL of tetrahydrofuran (THF), and shaken with a shaker at 23°C at 200 rpm for 24 hours. After shaking, THF was separated from the adhesive swollen with THF by filtration using a metal mesh (opening #200 mesh, mass: $W_1$ (g)). The adhesive swollen with THF was dried at 110°C for one hour, and then the mass $W_2$ (g) of the adhesive including the metal mesh was measured. The gel fraction was calculated using the following equation (I). Table 5 shows the results.

$$\text{Gel fraction (\% by mass)} = 100 \times (W_2 - W_1)/W_0 \qquad (I)$$

($W_0$: initial mass of adhesive layer, $W_1$: mass of metal mesh, $W_2$: mass of adhesive layer after drying (including metal mesh))

(Measurement of concentration of aliphatic hydrocarbon solvent in adhesive layer)

In (Measurement of gel fraction of adhesive layer) described above, the gel component of the adhesive swollen with THF was filtered out, and the resulting sol component of the adhesive layer was diluted in chloroform to prepare a sample solution. The obtained sample solution was subjected to gas chromatography-mass spectrometry (GC/MS). From the peak areas of the obtained spectrum, the concentration of the aliphatic hydrocarbon solvent (ppm) in the adhesive layer was measured. Table 5 shows the results.

<GC-MS measurement conditions>

Gas chromatograph-mass spectrometer: JMS Q1500 (available from JEOL Ltd.)

Mobile phase: helium
Helium flow rate: 1.0 mL/min
Detector: quadrupole mass spectrometer
Ionization method: EI
Column: SLB-5ms capillary GC column (available from Sigma-Aldrich)
Inlet temperature: 320 °C
Column temperature: 40°C to 340°C
Injection volume: 1.0 μL

(Measurement of concentration of aromatic hydrocarbon solvent in adhesive layer)

The concentration of the aromatic hydrocarbon solvent (ppm) was measured as in (Measurement of concentration of aliphatic hydrocarbon solvent of adhesive layer) described above. Table 5 shows the results.

(Examples 2 to 41 and Comparative Examples 1 to 5)

An acrylic adhesive composition and an adhesive tape were obtained and subjected to the measurements as in Example 1, except that the composition in the (Preparation of acrylic adhesive composition) described above was as shown in Tables 5 to 8. Tables 5 to 8 show the results.

(Examples 42 to 44)

An acrylic adhesive composition was prepared as in (Preparation of acrylic adhesive composition) of Example 1 described above except that the composition was as shown in Table 7. The obtained acrylic adhesive composition in the form of a solution was sufficiently stirred and then applied, using a doctor knife, onto the release-treated side of a 50-μm-thick polyethylene terephthalate (PET) release film having one release-treated side, and the applied solution was dried by heating at 110°C for 10 minutes to produce a 50-μm-thick adhesive layer formed from the acrylic adhesive composition. The formed adhesive layer was attached to one side of the substrate shown in Table 7. Furthermore, an adhesive layer with the same composition and thickness was formed and attached to the other side of the substrate to be integrally laminated. The resulting laminate was aged in a 40°C environment for 48 hours, whereby an adhesive tape including the adhesive layers on both sides of the substrate was obtained. The measurements were performed as in Example 1. Table 7 shows the results.

<Evaluation>

The adhesive tapes obtained in the examples and the comparative examples were evaluated as follows. Tables 5 to 8 show the results.

(Applicability and appearance)

In (Production of adhesive tape) described above, the formed adhesive layer was visually observed and evaluated for applicability and appearance in accordance with the following criteria.

◦: The formed adhesive layer had no lines or streaks at all.
△: The formed adhesive layer had some lines or streaks.
×: The formed adhesive layer had many lines or streaks.

(Adhesion)

The PET release film on one side of the obtained adhesive tape (the side of the adhesive layer not to be measured) was removed. The exposed adhesive layer was attached to a 23-μm-thick polyethylene terephthalate (PET) film without trapping air. The workpiece was cut to 25 mm in width × 100 mm in length to prepare a specimen. The obtained specimen was attached to a SUS plate (SUS304 plate washed with ethanol and then wiped dry) by moving a 2-kg rubber roller back and forth once thereon at a speed of 300 mm/min, whereby a measurement sample was prepared. The obtained measurement sample was subjected to a 180° peel test in conformity with JIS Z0237 using a tensile tester (RTI-1310, available from A&D Company, Ltd.) at 23°C, 50% RH, and a peel rate of 300 mm/min. The adhesive tape was peeled off from the SUS plate, whereby the 180° peel force (N/25 mm) was measured.
Using the obtained 180° peel force, the adhesion was evaluated in accordance with the following criteria.

◦◦: The 180° peel force was 35 N/25 mm or greater.
◦: The 180° peel force was 30 N/25 mm or greater and less than 35 N/25 mm.
△: The 180° peel force was 25 N/25 mm or greater and less than 30 N/25 mm.
×: The 180° peel force was less than 25 N/25 mm.

(Holding performance at high temperature)

The PET release film on one side of the obtained adhesive tape was removed, and the exposed adhesive layer was attached to a 23-μm-thick polyethylene terephthalate (PET) film without trapping air. The workpiece was cut into a 25-mm-wide strip and attached to a SUS plate (SUS304 plate washed with ethanol and then wiped dry) by moving a 2-kg rubber roller back and forth once thereon at a speed of 300 mm/min. Subsequently, a cut was made in the adhesive tape such that a bonding area of 25 mm × 25 mm was obtained. The workpiece was left to stand at 23°C for 20 minutes, whereby a test sample was prepared. The test sample prepared was put in an 80°C oven and heated for 20 minutes. Then, as shown in FIG. 1, a 500-g weight was attached to the sample to apply a shear load thereto at 80°C and 50% RH. After one hour from the application of the load, the amount of displacement (shift) (mm) from the position of the cut was measured with a scale magnifier.
Using the obtained amount of displacement (mm), the holding performance at high temperature was evaluated in accordance with the following criteria.

◦: The amount of displacement was less than 0.5 mm.
△: The amount of displacement was 0.5 mm or greater and less than 25 mm.
×: The amount of displacement was 25 mm or greater, and the adhesive tape fell off.

Even if evaluated as "×" in this evaluation, the adhesive tape of the present invention still can be used without problems depending on the application.

(Odor level)

The odor level was evaluated in conformity with VDA270.
Specifically, the adhesive tape, cut into 5 cm in width × 10 cm in length (size: 50 $cm^2$), was sealed in a glass vessel with an inner capacity of 1.0 L. The glass vessel with the adhesive tape sealed therein was left to stand in a 40°C environment for 24 hours. The adhesive tape was then taken out from the glass vessel, and the odor level immediately after taking out the adhesive tape was rated in accordance with the following six-point scale.

· 1: Not perceptible
· 2: Slightly perceptible, not disturbing
· 3: Clearly perceptible, only mildly disturbing
· 4: Clearly perceptible, disturbing
· 5: Clearly perceptible, strongly disturbing
· 6: Clearly perceptible, unacceptable

Three panelists each rated the odor level, and the average score was calculated. The calculated average score was evaluated as follows: an average score of less than 3.0

[Table 5]

| | | | | Example 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|---|
| Adhesive layer | Composition of acrylic adhesive composition | Acrylic copolymer | Type | A | B | C | D | E | F | D | G | H | I | J | K | L | M | N |
| | | | Parts by mass | 100 | 100 | 100 | 100 | 100 | 100 | 100 | 100 | 100 | 100 | 100 | 100 | 100 | 100 | 100 |
| | | Tackifier resin (parts by mass) | Terpene phenol resin (Hydroxyl value 140 mg KOH/g) (YS Polyster G150, Yasuhara Chemical Co., Ltd.) | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 |
| | | | Terpene phenol resin (Hydroxyl value 20 mg KOH/g) (YS Polyster U115, Yasunara Chemical Co., Ltd.) | - | - | - | - | - | - | - | - | - | - | - | - | - | - | - |
| | | | Terpene resin (Hydroxyl value 0 mg KOH/g) (YS Resin PX1150, Yasuhara Chemical Co., Ltd.) | - | - | - | - | | - | - | - | - | - | - | - | - | - | - |
| | | Solvent (parts by mass) | Hydrocarbon solvent / Aliphatic hydrocarbon solvent / Normal hexane (SP value: 7.28) | - | - | - | - | - | - | - | - | - | - | - | - | - | - | - |
| | | | Hydrocarbon solvent / Aliphatic hydrocarbon solvent / Cyclohexane (SP value: 8.06) | 150 | 150 | 150 | 150 | 150 | 150 | 300 | 150 | 150 | 150 | 150 | 150 | 150 | 150 | 150 |
| | | | Hydrocarbon solvent / Aliphatic hydrocarbon solvent / Methylcyclohexane (SP value: 7.92) | - | - | - | - | - | - | - | - | - | - | - | - | - | - | - |
| | | | Hydrocarbon solvent / Aliphatic hydrocarbon solvent / Decahydronaphthalene (SP value: 8.53) | - | - | - | - | - | - | - | - | - | - | - | - | - | - | - |
| | | | Hydrocarbon solvent / Aromatic hydrocarbon solvent / Toluene (SP value: 9.13) | - | - | - | - | - | - | - | - | - | - | - | - | - | - | - |
| | | | Ester solvent / Ethyl acetate (SP value: 8.74) | 150 | 150 | 150 | 150 | 150 | 150 | - | 150 | 150 | 150 | 150 | 150 | 150 | 150 | 150 |
| | | | Ester solvent / Methyl acetate (SP value: 8.77) | - | - | - | - | - | - | - | - | - | - | - | - | - | - | - |
| | | Crosslinking agent (parts by mass) | Isocyanate crosslinking agent (Desmodur L-75, Covestro) | 1.0 | 1.0 | 1.0 | 1.0 | 1.0 | 1.0 | 1.0 | 1.0 | 1.0 | 1.0 | 1.0 | 1.0 | 0.0 | 3.0 | 1.0 |
| Substrate | PET film (FE2002, Futamura Chemical Co., Ltd., thickness: 50 µm) | | | - | - | - | - | - | - | - | - | - | - | - | - | - | - | - |
| | PEF film (Volara H #07005, Sekisui Chemical Co., Ltd., thickness: 150 µm) | | | - | - | - | - | - | - | - | - | - | - | - | - | - | - | - |
| | Non-woven fabric (G2260-1S, Toray International, Inc., thickness: 610 µm) | | | - | - | - | - | - | - | - | - | - | - | - | - | - | - | - |
| Proportion of hydrocarbon solvent in total amount of hydrocarbon solvent and ester solvent contained in acrylic adhesive composition (% by mass) | | | | 50 | 50 | 50 | 50 | 50 | 50 | 100 | 50 | 50 | 50 | 50 | 50 | 50 | 50 | 50 |
| Concentration of aromatic hydrocarbon solvent in acrylic adhesive composition (ppm) | | | | 0 | 0 | 0 | 0 | 0 | 0 | 0 | 0 | 0 | 0 | 0 | 0 | 0 | 0 | 0 |
| Solid content in acrylic adhesive composition (% by mass) | | | | 29 | 29 | 29 | 29 | 29 | 29 | 29 | 29 | 29 | 29 | 29 | 29 | 29 | 29 | 29 |
| Gel fraction of adhesive layer (% by mass) | | | | 30 | 30 | 30 | 30 | 30 | 30 | 30 | 30 | 30 | 30 | 30 | 30 | 30 | 30 | 30 |
| Concentration of aliphatic hydrocarbon solvent in adhesive layer (ppm) | | | | 30 | 30 | 30 | 30 | 30 | 30 | 70 | 30 | 30 | 30 | 30 | 30 | 30 | 30 | 30 |
| Concentration of aromatic hydrocarbon solvent in adhesive layer (ppm) | | | | 0 | 0 | 0 | 0 | 0 | 0 | 0 | 0 | 0 | 0 | 0 | 0 | 0 | 0 | 0 |
| Evaluation | Applicability and appearance | | | ○ | ○ | ○ | ○ | ○ | ○ | △ | ○ | ○ | ○ | ○ | ○ | ○ | ○ | ○ |
| | Adhesion | | | ○ | ◎ | ◎ | ◎ | ◎ | ○ | ◎ | ○ | ○ | ○ | ○ | ○ | ○ | ○ | △ |
| | Holding performance at high temperature | | | ○ | ○ | ○ | ○ | ○ | △ | ○ | ○ | ○ | ○ | ○ | ○ | × | ○ | ○ |
| | Odor level | | | ○ | ○ | ○ | ○ | ○ | ○ | ○ | ○ | ○ | ○ | ○ | ○ | ○ | ○ | ○ |

was evaluated as "◦"; an average score of less than 4.0 and 3.0 or greater was evaluated as "△"; and an average score of 4.0 or greater was evaluated as "×".

Even if evaluated as "×" in this evaluation, the adhesive tape of the present invention still can be used without problems depending on the application.

[Table 6]

| | Example 16 | 17 | 18 | 19 | 20 | 21 | 22 | 23 | 24 | 25 | 26 | 27 | 28 | 29 | 30 |
|---|---|---|---|---|---|---|---|---|---|---|---|---|---|---|---|
| Adhesive layer / Composition of acrylic adhesive composition / Acrylic copolymer / Type | O | P | Q | D | D | D | D | D | D | D | D | D | D | D | D |
| Adhesive layer / Composition of acrylic adhesive composition / Acrylic copolymer / Parts by mass | 100 | 100 | 100 | 100 | 100 | 100 | 100 | 100 | 100 | 100 | 100 | 100 | 100 | 100 | 100 |
| Tackifier resin (parts by mass) / Terpene phenol resin (Hydroxyl value 140 mg KOH/g) (YS Polyster G150, Yasuhara Chemical Co., Ltd.) | 20.0 | 20.0 | - | - | 10.0 | 30.0 | 40.0 | - | - | 20.0 | 20.0 | 20.0 | 20.0 | 20.0 | 20.0 |
| Tackifier resin (parts by mass) / Terpene phenol resin (Hydroxyl value 20 mg KOH/g) (YS Polyster U115, Yasuhara Chemical Co., Ltd.) | - | - | - | - | - | - | - | 20.0 | - | - | - | - | - | - | - |
| Tackifier resin (parts by mass) / Terpene resin (Hydroxyl value 0 mg KOH/g) (YS Resin PX1150, Yasuhara Chemical Co., Ltd.) | - | - | - | - | - | - | - | - | 20.0 | - | - | - | - | - | - |
| Solvent (parts by mass) / Hydrocarbon solvent / Aliphatic hydrocarbon solvent / Normal hexane (SP value: 7.28) | - | - | - | - | - | - | - | - | - | - | - | - | 150 | - | - |
| Solvent (parts by mass) / Hydrocarbon solvent / Aliphatic hydrocarbon solvent / Cyclohexane (SP value: 8.06) | 150 | 150 | 150 | 150 | 150 | 150 | 150 | 150 | 150 | 150 | 150 | 150 | - | - | - |
| Solvent (parts by mass) / Hydrocarbon solvent / Aliphatic hydrocarbon solvent / Methylcyclohexane (SP value: 7.92) | - | - | - | - | - | - | - | - | - | - | - | - | - | 150 | - |
| Solvent (parts by mass) / Hydrocarbon solvent / Aliphatic hydrocarbon solvent / Decahydronaphthalene (SP value: 8.53) | - | - | - | - | - | - | - | - | - | - | - | - | - | - | 150 |
| Solvent (parts by mass) / Hydrocarbon solvent / Aromatic hydrocarbon solvent / Toluene (SP value: 9.13) | - | - | - | - | - | - | - | - | - | - | - | - | - | - | - |
| Solvent (parts by mass) / Ester solvent / Ethyl acetate (SP value: 8.74) | 150 | 150 | 150 | 150 | 150 | 150 | 150 | 150 | 150 | 150 | 150 | 150 | 150 | 150 | 150 |
| Solvent (parts by mass) / Ester solvent / Methyl acetate (SP value: 8.77) | - | - | - | - | - | - | - | - | - | - | - | - | - | - | - |
| Crosslinking agent (parts by mass) / Isocyanate crosslinking agent (Desmodur L-75, Covestro) | 1.0 | 1.0 | 1.0 | 1.0 | 0.8 | 1.5 | 2.0 | 1.0 | 1.0 | 0.0 | 0.2 | 5.0 | 1.0 | 1.0 | 1.0 |
| Substrate / PET film (FE2002, Futamura Chemical Co., Ltd., thickness: 50 µm) | - | - | - | - | - | - | - | - | - | - | - | - | - | - | - |
| Substrate / PEF film (Volara H #07005, Sekisui Chemical Co., Ltd., thickness: 150 µm) | - | - | - | - | - | - | - | - | - | - | - | - | - | - | - |
| Substrate / Non-woven fabric (G2260-1S, Toray International, Inc., thickness: 610 µm) | - | - | - | - | - | - | - | - | - | - | - | - | - | - | - |
| Proportion of hydrocarbon solvent in total amount of hydrocarbon solvent and ester solvent contained in acrylic adhesive composition (% by mass) | 50 | 50 | 50 | 50 | 50 | 50 | 50 | 50 | 50 | 50 | 50 | 50 | 50 | 50 | 50 |
| Concentration of aromatic hydrocarbon solvent in acrylic adhesive composition (ppm) | 0 | 0 | 0 | 0 | 0 | 0 | 0 | 0 | 0 | 0 | 0 | 0 | 0 | 0 | 0 |
| Solid content in acrylic adhesive composition (% by mass) | 29 | 29 | 25 | 25 | 27 | 30 | 32 | 29 | 29 | 29 | 29 | 29 | 29 | 29 | 29 |
| Gel fraction of adhesive layer (% by mass) | 30 | 30 | 30 | 30 | 30 | 30 | 30 | 30 | 30 | 0 | 15 | 70 | 30 | 30 | 30 |
| Concentration of aliphatic hydrocarbon solvent in adhesive layer (ppm) | 30 | 30 | 30 | 30 | 30 | 30 | 30 | 30 | 30 | 30 | 30 | 30 | 15 | 120 | 3000 |
| Concentration of aromatic hydrocarbon solvent in adhesive layer (ppm) | 0 | 0 | 0 | 0 | 0 | 0 | 0 | 0 | 0 | 0 | 0 | 0 | 0 | 0 | 0 |
| Evaluation / Applicability and appearance | ○ | ○ | ○ | ○ | ○ | ○ | ○ | ○ | ○ | ○ | ○ | ○ | ○ | ○ | ○ |
| Evaluation / Adhesion | ○○ | ○○ | ○ | △ | ○○ | ○○ | ○ | ○○ | ○ | ○○ | ○○ | ○○ | ○○ | ○○ | ○ |
| Evaluation / Holding performance at high temperature | △ | ○ | ○ | ○ | ○ | ○ | ○ | ○ | ○ | × | △ | ○ | ○ | ○ | △ |
| Evaluation / Odor level | ○ | ○ | ○ | ○ | ○ | ○ | ○ | ○ | ○ | ○ | ○ | ○ | ○ | ○ | ○ |

[Table 7]

| | | | | Example | | | | | | | | | | | | | |
|---|---|---|---|---|---|---|---|---|---|---|---|---|---|---|---|---|---|
| | | | | 31 | 32 | 33 | 34 | 35 | 36 | 37 | 38 | 39 | 40 | 41 | 42 | 43 | 44 |
| Adhesive layer | Composition of acrylic adhesive composition | Acrylic copolymer | Type | D | D | D | D | D | D | D | D | D | D | D | D | D | D |
| | | | Parts by mass | 100 | 100 | 100 | 100 | 100 | 100 | 100 | 100 | 100 | 100 | 100 | 100 | 100 | 100 |
| | | Tackifier resin (parts by mass) | Terpene phenol resin (Hydroxyl value 140 mg KOH/g) (YS Polyster G150, Yasuhara Chemical Co., Ltd.) | 20.0 | 20.0 | 20.0 | 20.0 | 20.0 | 20.0 | 20.0 | 20.0 | 20.0 | 20.0 | 20.0 | 20.0 | 20.0 | 20.0 |
| | | | Terpene phenol resin (Hydroxyl value 20 mg KOH/g) (YS Polyster U115, Yasuhara Chemical Co., Ltd.) | - | - | - | - | - | - | - | - | - | - | - | - | - | - |
| | | | Terpene resin (Hydroxyl value 0 mg KOH/g) (YS Resin PX1150, Yasuhara Chemical Co., Ltd.) | - | - | - | - | - | - | - | - | - | - | - | - | - | - |
| | | Solvent (parts by mass) | Hydrocarbon solvent / Aliphatic hydrocarbon solvent / Normal hexane (SP value: 7.28) | - | - | - | - | - | - | - | - | - | - | - | - | - | |
| | | | Hydrocarbon solvent / Aliphatic hydrocarbon solvent / Cyclohexane (SP value: 8.06) | 150 | 270 | 210 | 90 | 30 | 250 | 80 | 150 | 150 | 150 | - | 150 | 150 | 150 |
| | | | Hydrocarbon solvent / Aliphatic hydrocarbon solvent / Methylcyclohexane (SP value: 7.92) | - | - | - | - | - | - | - | - | - | - | - | - | - | - |
| | | | Hydrocarbon solvent / Aliphatic hydrocarbon solvent / Decahydronaphthalene (SP value: 8.53) | - | - | - | - | - | - | - | - | - | - | - | - | - | - |
| | | | Hydrocarbon solvent / Aromatic hydrocarbon solvent / Toluene (SP value: 9.13) | - | - | - | - | - | - | - | 0.05 | 0.2 | 1.0 | 150 | - | - | - |
| | | | Ester solvent / Ethyl acetate (SP value: 8.74) | - | 30 | 90 | 210 | 270 | 250 | 80 | 150 | 150 | 150 | 150 | 150 | 150 | 150 |
| | | | Ester solvent / Methyl acetate (SP value: 8.77) | 150 | - | - | - | - | - | - | - | - | - | - | - | - | - |
| | | Crosslinking agent (parts by mass) | Isocyanate crosslinking agent (Desmodur L-75, Covestro) | 1.0 | 1.0 | 1.0 | 1.0 | 1.0 | 1.0 | 1.0 | 1.0 | 1.0 | 1.0 | 1.0 | 1.0 | 1.0 | 1.0 |
| Substrate | PET film (FE2002, Futamura Chemical Co., Ltd., thickness: 50 μm) | | | - | - | - | - | - | - | - | - | - | - | - | ○ | - | - |
| | PEF film (Volara H #07005, Sekisui Chemical Co., Ltd., thickness: 150 μm) | | | - | - | - | - | - | - | - | - | - | - | - | - | ○ | - |
| | Non-woven fabric (G2260-1S, Toray International, Inc., thickness: 610 μm) | | | - | - | - | - | - | - | - | - | - | - | - | - | - | ○ |
| Proportion of hydrocarbon solvent in total amount of hydrocarbon solvent and ester solvent contained in acrylic adhesive composition (% by mass) | | | | 50 | 90 | 70 | 30 | 10 | 50 | 50 | 50 | 50 | 50 | 50 | 50 | 50 | 50 |

(continued)

| | | Example | | | | | | | | | | | | | |
|---|---|---|---|---|---|---|---|---|---|---|---|---|---|---|---|
| | | 31 | 32 | 33 | 34 | 35 | 36 | 37 | 38 | 39 | 40 | 41 | 42 | 43 | 44 |
| Concentration of aromatic hydrocarbon solvent in acrylic adhesive composition (ppm) | | 0 | 0 | 0 | 0 | 0 | 0 | 0 | 167 | 666 | 3322 | 500000 | 0 | 0 | 0 |
| Solid content in acrylic adhesive composition (% by mass) | | 29 | 29 | 29 | 29 | 29 | 19 | 43 | 29 | 29 | 29 | 29 | 29 | 29 | 29 |
| Gel fraction of adhesive layer (% by mass) | | 30 | 30 | 30 | 30 | 30 | 30 | 30 | 30 | 30 | 30 | 30 | 30 | 30 | 30 |
| Concentration of aliphatic hydrocarbon solvent in adhesive layer (ppm) | | 26 | 80 | 45 | 20 | 12 | 100 | 12 | 30 | 30 | 30 | 0 | 30 | 30 | 30 |
| Concentration of aromatic hydrocarbon solvent in adhesive layer (ppm) | | 0 | 0 | 0 | 0 | 0 | 0 | 0 | 100 | 280 | 800 | 1100 | 0 | 0 | 0 |
| Evaluation | Applicability and appearance | ○ | ○ | ○ | ○ | ○ | ○ | ○ | ○ | ○ | ○ | ○ | ○ | ○ | ○ |
| | Adhesion | ○○ | ○○ | ○○ | ○○ | ○○ | ○○ | ○○ | ○○ | ○○ | ○○ | ○○ | ○○ | ○○ | ○○ |
| | Holding performance at high temperature | ○ | ○ | ○ | ○ | ○ | ○ | ○ | ○ | ○ | ○ | ○ | ○ | ○ | ○ |
| | Odor level | ○ | ○ | ○ | ○ | ○ | ○ | ○ | Δ | Δ | × | × | ○ | ○ | ○ |

[Table 8]

| | | | | | | 1 | 2 | 3 | 4 | 5 |
|---|---|---|---|---|---|---|---|---|---|---|
| | | | | | | Comparative Example | | | | |
| Adhesive layer | Composition of acrylic adhesive composition | Acrylic copolymer | Type | | | R | R | D | D | D |
| | | | Parts by mass | | | 100 | 100 | 100 | 100 | 100 |
| | | Tackifier resin (parts by mass) | Terpene phenol resin (Hydroxyl value 140 mg KOH/g) (YS Polyster G150, Yasuhara Chemical Co., Ltd.) | | | 20.0 | 20.0 | 20.0 | 20.0 | 20.0 |
| | | | Terpene phenol resin (Hydroxyl value 20 mg KOH/g) (YS Polyster U115, Yasuhara Chemical Co., Ltd.) | | | - | - | - | - | - |
| | | | Terpene resin (Hydroxyl value 0 mg KOH/g) (YS Resin PX1150, Yasuhara Chemical Co., Ltd.) | | | - | - | - | - | - |
| | | Solvent (parts by mass) | Hydrocarbon solvent | Aliphatic hydrocarbon solvent | Normal hexane (SP value: 7.28) | - | - | - | - | - |
| | | | | | Cyclohexane (SP value: 8.06) | 300 | 150 | - | 400 | 50 |
| | | | | | Methylcyclohexane (SP value: 7.92) | - | - | - | - | - |
| | | | | | Decahydronaphthalene (SP value: 8.53) | - | - | - | - | - |
| | | | | Aromatic hydrocarbon solvent | Toluene (SP value: 9.13) | - | - | - | - | - |
| | | | Ester solvent | Ethyl acetate (SP value: 8.74) | | - | 150 | 300 | 400 | 50 |
| | | | | Methyl acetate (SP value: 8.77) | | - | - | - | - | - |
| | | Crosslinking agent (parts by mass) | Isocyanate crosslinking agent (Desmodur L-75, Covestro) | | | 1.0 | 1.0 | 1.0 | 1.0 | 1.0 |
| Substrate | PET film (FE2002, Futamura Chemical Co., Ltd., thickness: 50 μm) | | | | | - | - | - | - | - |
| | PEF film (Volara H #07005, Sekisui Chemical Co., Ltd., thickness: 150 μm) | | | | | - | - | - | - | - |
| | Non-woven fabric (G2260-1S, Toray International, Inc., thickness: 610 μm) | | | | | - | - | - | - | - |
| Proportion of hydrocarbon solvent in total amount of hydrocarbon solvent and ester solvent contained in acrylic adhesive composition (% by mass) | | | | | | 100 | 100 | 0 | 50 | 50 |

(continued)

| | | Comparative Example | | | | |
|---|---|---|---|---|---|---|
| | | 1 | 2 | 3 | 4 | 5 |
| Concentration of aromatic hydrocarbon solvent in acrylic adhesive composition (ppm) | | 0 | 0 | 0 | 0 | 0 |
| Solid content in acrylic adhesive composition (% by mass) | | 29 | 29 | 29 | 13 | 55 |
| Gel fraction of adhesive layer (% by mass) | | 30 | 30 | 30 | 30 | 30 |
| Concentration of aliphatic hydrocarbon solvent in adhesive layer (ppm) | | 80 | 80 | 0 | 140 | 10 |
| Concentration of aromatic hydrocarbon solvent in adhesive layer (ppm) | | 0 | 0 | 0 | 0 | 0 |
| Evaluation | Applicability and appearance | ○ | ○ | × | × | × |
| | Adhesion | × | × | ○ | ○ | ○ |
| | Holding performance at high temperature | ○ | ○ | ○ | ○ | ○ |
| | Odor level | ○ | ○ | ○ | ○ | ○ |

INDUSTRIAL APPLICABILITY

The present invention can provide an acrylic adhesive composition that has excellent applicability to enable application without lines or streaks and that can exhibit high adhesion. The present invention can also provide an adhesive formed from the adhesive composition and an adhesive tape formed from the acrylic adhesive composition. The present invention can also provide an adhesive tape having good appearance without lines or streaks. The present invention can also provide a method for producing an adhesive tape formed from the acrylic adhesive composition. The present invention can also provide a method for producing an acrylic copolymer, the acrylic copolymer being usable in an acrylic adhesive composition that has excellent applicability to enable application without lines or streaks and that can exhibit high adhesion.

REFERENCE SIGNS LIST

1 polyethylene terephthalate (PET) film
2 adhesive tape
3 SUS 304 plate
4 weight (500 g)

## Claims

1. An acrylic adhesive composition comprising:

    an acrylic copolymer; and
    a solvent,
    the acrylic copolymer including a structural unit derived from an alkyl (meth)acrylate and a structural unit derived from an olefin polymer having a polymerizable unsaturated double bond at an end,
    the solvent including at least one solvent selected from the group consisting of a hydrocarbon solvent and a solvent having an SP value of 7.2 $(J/cm^3)^{1/2}$ or greater and 8.6 $(J/cm^3)^{1/2}$ or less,
    the acrylic adhesive composition having a solid content of 15% by mass or more and 50% by mass or less.

2. The acrylic adhesive composition according to claim 1,

    wherein the solvent includes a hydrocarbon solvent, and
    the hydrocarbon solvent includes an aliphatic hydrocarbon solvent.

3. The acrylic adhesive composition according to claim 2,
wherein the aliphatic hydrocarbon solvent includes a C6-C9 aliphatic hydrocarbon compound.

4. The acrylic adhesive composition according to claim 3,
wherein the C6-C9 aliphatic hydrocarbon compound includes at least one selected from the group consisting of normal hexane, cyclohexane, and methylcyclohexane.

5. The acrylic adhesive composition according to claim 1, 2, 3, or 4,
wherein the solvent further includes at least one solvent selected from the group consisting of an ester solvent and a solvent having an SP value of greater than 8.6 $(J/cm^3)^{1/2}$ and 9.0 $(J/cm^3)^{1/2}$ or less.

6. The acrylic adhesive composition according to claim 5,

    wherein the solvent includes an ester solvent,
    the ester solvent includes an ester compound represented by the following formula (1), and
    the hydrocarbon solvent is contained in a proportion of 5.0% by mass or more and less than 100% by mass in a total amount of the hydrocarbon solvent and the ester solvent contained:

[Chem. 1]

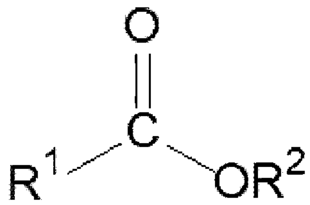

(1)

wherein $R^1$ and $R^2$ each independently represent a C1-C5 aliphatic hydrocarbon group.

**7.** The acrylic adhesive composition according to claim 1, 2, 3, 4, 5, or 6,

wherein the hydrocarbon solvent includes no aromatic hydrocarbon solvent, or
the hydrocarbon solvent includes an aromatic hydrocarbon solvent, and the aromatic hydrocarbon solvent is present at a concentration of 1,000 ppm or less in the solvent.

**8.** The acrylic adhesive composition according to claim 1, 2, 3, 4, 5, 6, or 7,
wherein the structural unit derived from an alkyl (meth)acrylate includes a structural unit derived from an alkyl (meth)acrylate containing an alcohol-derived C1-C4 alkyl group.

**9.** The acrylic adhesive composition according to claim 1, 2, 3, 4, 5, 6, 7, or 8,
wherein the structural unit derived from an alkyl (meth)acrylate is contained in a proportion of 50% by mass or more and 99% by mass or less in the acrylic copolymer.

**10.** The acrylic adhesive composition according to claim 1, 2, 3, 4, 5, 6, 7, 8, or 9,
wherein the structural unit derived from an olefin polymer having a polymerizable unsaturated double bond at an end is contained in a proportion of 5.0% by mass or more in the acrylic copolymer.

**11.** The acrylic adhesive composition according to claim 1, 2, 3, 4, 5, 6, 7, 8, 9, or 10,
wherein the acrylic copolymer includes a structural unit derived from a monomer containing a polar functional group.

**12.** The acrylic adhesive composition according to claim 11,
wherein the structural unit derived from a monomer containing a polar functional group includes at least one selected from the group consisting of a structural unit derived from a carboxy group-containing monomer and a structural unit derived from a hydroxy group-containing monomer.

**13.** The acrylic adhesive composition according to claim 11 or 12,
wherein the structural unit derived from a monomer containing a polar functional group is contained in a total proportion of 0.1% by mass or more and 20% by mass or less in the acrylic copolymer.

**14.** The acrylic adhesive composition according to claim 1, 2, 3, 4, 5, 6, 7, 8, 9, 10, 11, 12, or 13, comprising a tackifier resin.

**15.** The acrylic adhesive composition according to claim 14,
wherein the tackifier resin includes a high-hydroxyl-value tackifier resin having a hydroxyl value of 15 mg KOH/g or greater.

**16.** The acrylic adhesive composition according to claim 14 or 15,
wherein the tackifier resin is contained in an amount of 40 parts by mass or less relative to 100 parts by mass of the acrylic copolymer.

**17.** The acrylic adhesive composition according to claim 1, 2, 3, 4, 5, 6, 7, 8, 9, 10, 11, 12, 13, 14, 15, or 16, comprising a crosslinking agent.

**18.** An adhesive formed from the acrylic adhesive composition according to claim 1, 2, 3, 4, 5, 6, 7, 8, 9, 10, 11, 12, 13, 14, 15, 16, or 17.

**19.** An adhesive tape comprising
an adhesive layer formed from the acrylic adhesive composition according to claim 1, 2, 3, 4, 5, 6, 7, 8, 9, 10, 11, 12, 13, 14, 15, 16, or 17.

**20.** An adhesive tape comprising

an adhesive layer formed using an acrylic adhesive composition,
the acrylic adhesive composition containing an acrylic copolymer,
the acrylic copolymer including a structural unit derived from an alkyl (meth)acrylate and a structural unit derived from an olefin polymer having a polymerizable unsaturated double bond at an end,
the adhesive layer containing a solvent,
the solvent including an aliphatic hydrocarbon solvent.

**21.** The adhesive tape according to claim 20,
wherein the acrylic copolymer includes a structural unit derived from a monomer containing a polar functional group.

**22.** The adhesive tape according to claim 19, 20, or 21,

wherein the adhesive layer contains no aromatic hydrocarbon solvent, or
the adhesive layer contains an aromatic hydrocarbon solvent, and the aromatic hydrocarbon solvent is present at a concentration of 300 ppm or less in the adhesive layer.

**23.** The adhesive tape according to claim 19, 20, 21, or 22,
wherein the adhesive layer has a gel fraction of 10% by mass or more and 70% by mass or less.

**24.** The adhesive tape according to claim 19, 20, 21, 22, or 23, comprising a substrate.

**25.** The adhesive tape according to claim 19, 20, 21, 22, 23, or 24, which is used for fixing an electronic device component or an in-vehicle component.

**26.** A method for producing an adhesive tape, comprising
a step of applying the acrylic adhesive composition according to claim 1, 2, 3, 4, 5, 6, 7, 8, 9, 10, 11, 12, 13, 14, 15, 16, or 17.

**27.** A method for producing an acrylic copolymer, comprising

a step (i) of polymerizing a monomer mixture containing an alkyl (meth)acrylate and an olefin polymer having a polymerizable unsaturated double bond at an end in a solvent in the presence of a polymerization initiator,
the solvent including a hydrocarbon solvent.

**28.** The method for producing an acrylic copolymer according to claim 27,
wherein the hydrocarbon solvent includes an aliphatic hydrocarbon solvent.

**29.** The method for producing an acrylic copolymer according to claim 28,
wherein the aliphatic hydrocarbon solvent includes a C6-C9 aliphatic hydrocarbon compound.

**30.** The method for producing an acrylic copolymer according to claim 29,
wherein the C6-C9 aliphatic hydrocarbon compound includes at least one selected from the group consisting of normal hexane, cyclohexane, and methylcyclohexane.

**31.** The method for producing an acrylic copolymer according to claim 27, 28, 29, or 30,

wherein the solvent further includes an ester solvent,
the ester solvent includes an ester compound represented by the following formula (1),
the hydrocarbon solvent is blended in a proportion of 5.0% by mass or more and less than 100% by mass in a total amount of the hydrocarbon solvent and the ester solvent blended:

[Chem. 2]

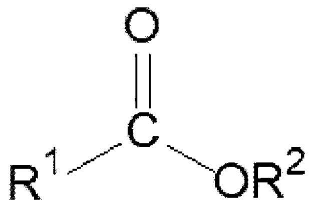

(1)

wherein $R^1$ and $R^2$ each independently represent a C1-C5 aliphatic hydrocarbon group.

**32.** The method for producing an acrylic copolymer according to claim 27, 28, 29, 30, or 31,
wherein the polymerization initiator includes at least one selected from the group consisting of an organic peroxide and an azo compound.

**33.** The method for producing an acrylic copolymer according to claim 27, 28, 29, 30, 31, or 32,
wherein the polymerization initiator is blended in an amount of 0.01 parts by mass or more and 3.0 parts by mass or less relative to 100 parts by mass of the monomer mixture.

**34.** The method for producing an acrylic copolymer according to claim 27, 28, 29, 30, 31, 32, or 33,
wherein in the step (i), the monomer mixture is polymerized at a temperature of 50°C or higher and 100°C or lower in the solvent in the presence of the polymerization initiator.

FIG.1

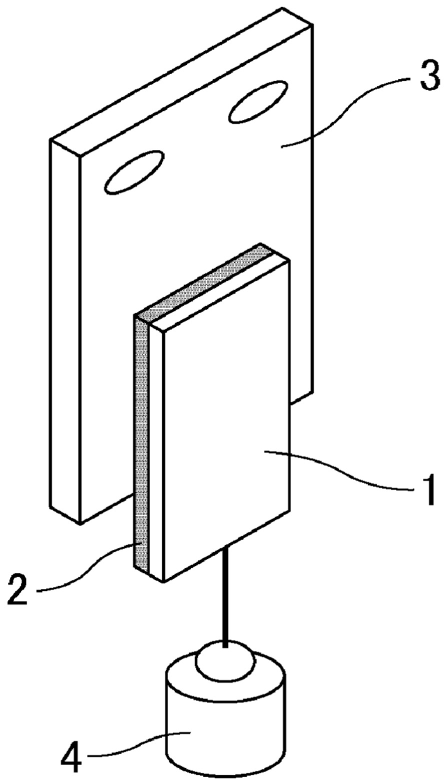

**INTERNATIONAL SEARCH REPORT**

International application No.
**PCT/JP2024/027694**

**A. CLASSIFICATION OF SUBJECT MATTER**

***C09J 151/00***(2006.01)i; ***B32B 27/00***(2006.01)i; ***B32B 27/30***(2006.01)i; ***C08F 220/00***(2006.01)i; ***C09J 7/22***(2018.01)i; ***C09J 7/24***(2018.01)i; ***C09J 7/38***(2018.01)i; ***C09J 11/08***(2006.01)i; ***C09J 123/00***(2006.01)i; ***C09J 133/00***(2006.01)i; ***C09J 133/02***(2006.01)i; ***C09J 133/04***(2006.01)i; ***C09J 133/06***(2006.01)i; ***C09J 133/14***(2006.01)i
FI: C09J151/00; B32B27/00 M; B32B27/30 A; C08F220/00; C09J7/22; C09J7/24; C09J7/38; C09J11/08; C09J123/00; C09J133/00; C09J133/02; C09J133/04; C09J133/06; C09J133/14

According to International Patent Classification (IPC) or to both national classification and IPC

**B. FIELDS SEARCHED**

Minimum documentation searched (classification system followed by classification symbols)

C09J151/00; B32B27/00; B32B27/30; C08F220/00; C09J7/22; C09J7/24; C09J7/38; C09J11/08; C09J123/00; C09J133/00; C09J133/02; C09J133/04; C09J133/06; C09J133/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-100813 A (SANYO CHEMICAL INDUSTRIES, LTD.) 02 July 2020 (2020-07-02) claims, paragraphs [0004], [0018], [0030], [0034]-[0048], example 3, table 1 | 1-34 |
| A | JP 2000-80134 A (SEKISUI CHEMICAL CO., LTD.) 21 March 2000 (2000-03-21) | 1-34 |
| A | JP 2014-145054 A (SEKISUI CHEMICAL CO., LTD.) 14 August 2014 (2014-08-14) | 1-34 |
| A | WO 2022/230935 A1 (SEKISUI CHEMICAL CO., LTD.) 03 November 2022 (2022-11-03) | 1-34 |
| A | JP 2004-143403 A (MITSUI CHEMICALS, INC.) 20 May 2004 (2004-05-20) | 1-34 |
| A | JP 2022-52317 A (SOKEN KAGAKU KK) 04 April 2022 (2022-04-04) | 1-34 |
| A | JP 2014-19775 A (NITTO DENKO CORPORATION) 03 February 2014 (2014-02-03) | 1-34 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**

International application No.
**PCT/JP2024/027694**

**C. DOCUMENTS CONSIDERED TO BE RELEVANT**

| Category* | Citation of document, with indication, where appropriate, of the relevant passages | Relevant to claim No. |
|---|---|---|
| A | JP 2010-265440 A (EMULSION TECHNOLOGY CO., LTD.) 25 November 2010 (2010-11-25) | 1-34 |

Form PCT/ISA/210 (second sheet) (July 2022)

**INTERNATIONAL SEARCH REPORT**
**Information on patent family members**

International application No.
**PCT/JP2024/027694**

| Patent document cited in search report | Publication date (day/month/year) | Patent family member(s) | Publication date (day/month/year) |
|---|---|---|---|
| JP 2020-100813 A | 02 July 2020 | (Family: none) | |
| JP 2000-80134 A | 21 March 2000 | (Family: none) | |
| JP 2014-145054 A | 14 August 2014 | (Family: none) | |
| WO 2022/230935 A1 | 03 November 2022 | US 2024/0191109 A1 | |
| | | EP 4332192 A1 | |
| | | CN 116547360 A | |
| | | KR 10-2024-0004208 A | |
| JP 2004-143403 A | 20 May 2004 | US 2004/0242791 A1 | |
| | | EP 1396504 A2 | |
| | | KR 10-2004-0020801 A | |
| | | CN 1495209 A | |
| JP 2022-52317 A | 04 April 2022 | (Family: none) | |
| JP 2014-19775 A | 03 February 2014 | US 2014/0023857 A1 | |
| | | CN 103571350 A | |
| JP 2010-265440 A | 25 November 2010 | CN 101864248 A | |
| | | KR 10-2010-0114460 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015052050 A
- JP 2015021067 A
- JP 2015120876 A


### Non-patent literature cited in the description


- **R. F. FEDORS**. *Polym. Eng. Sci.*, 1974, vol. 14 (2), 147-154